(19)

**Europäisches Patentamt**

**European Patent Office**

**Office européen des brevets**

(11) **EP 4 786 544 A1**

(12) **EUROPEAN PATENT APPLICATION**
published in accordance with Art. 153(4) EPC

(43) Date of publication:
**05.08.2026 Bulletin 2026/32**

(21) Application number: **24872339.7**

(22) Date of filing: **26.09.2024**

(51) International Patent Classification (IPC):
*C08L 29/04* $^{(2006.01)}$ *B32B 27/28* $^{(2006.01)}$
*C08K 3/11* $^{(2018.01)}$ *C08K 3/105* $^{(2018.01)}$
*C08L 23/00* $^{(2006.01)}$ *C08L 77/00* $^{(2006.01)}$

(52) Cooperative Patent Classification (CPC):
**B32B 27/28; C08K 3/105; C08K 3/11; C08L 23/00;**
**C08L 29/04; C08L 77/00**

(86) International application number:
**PCT/JP2024/034321**

(87) International publication number:
**WO 2025/070553 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 29.09.2023 JP 2023169797
29.09.2023 JP 2023169799
29.09.2023 JP 2023169800
29.09.2023 JP 2023169801
29.09.2023 JP 2023169802
29.09.2023 JP 2023169803
29.09.2023 JP 2023169804

(71) Applicant: **Mitsubishi Chemical Corporation**
**Tokyo 100-8251 (JP)**

(72) Inventors:
• **YAMAMOTO, Nobuyuki**
**Tokyo 100-8251 (JP)**
• **TOMITA, Yuuko**
**Tokyo 100-8251 (JP)**
• **YOSHIMURA, Nobuyoshi**
**Tokyo 100-8251 (JP)**
• **KADOWAKI, Keisuke**
**Tokyo 100-8251 (JP)**
• **YANO, Tomotake**
**Tokyo 100-8251 (JP)**

(74) Representative: **Hoffmann Eitle**
**Patent- und Rechtsanwälte PartmbB**
**Arabellastraße 30**
**81925 München (DE)**

(54) **COMPOSITION, MOLDING MATERIAL, MULTILAYER STRUCTURE, MOLDED BODY, FOOD PACKAGE, AND METHOD FOR PRODUCING COMPOSITION AND MULTILAYER STRUCTURE**

(57) A composition containing an ethylene-vinyl alcohol copolymer and a titanium compound, wherein at least a portion of the ethylene-vinyl alcohol copolymer is derived from biomass, and a content of the titanium compound in terms of metal is 0.0001 ppm or more and less than 1 ppm relative to a mass of the composition is provided as a composition excellent in thermal stability.

**EP 4 786 544 A1**

## Description

Technical Field

The present disclosure relates to a composition, a molding material, a multilayer structure, a molded body, a food packaging body, and a method for producing a composition and a multilayer structure.

Background Art

Ethylene-vinyl alcohol copolymers (hereinafter may be referred to as "EVOH resin") are excellent in transparency, gas barrier properties with respect to oxygen or the like, aroma retaining properties, solvent resistance, oil resistance, mechanical strength, and the like. The copolymers are molded into films, sheets, bottles, and the like, and are widely used as various packaging materials such as food packaging materials, pharmaceutical packaging materials, industrial drug packaging materials, and agrochemical packaging materials.

Meanwhile, in recent years, the demand for bioplastics using carbon-neutral biomass-derived raw materials has increased with the aim of achieving a recycling-oriented society. However, it is known that biomass-derived synthetic resins are inferior in performance to fossil fuel-derived synthetic resins. Thus, a biomass-derived resin having performance comparable to that of a fossil fuel-derived resin has been studied by combining a biomass-derived raw material and a fossil fuel-derived raw material.

For example, Patent Literatures 1 and 2 disclose a gas barrier resin composition in which a part of ethylene and vinyl ester, which are raw materials of an EVOH resin, are derived from biomass. Patent Literatures 1 and 2 disclose that the gas barrier resin composition has gas barrier properties and long-run properties like a composition using only fossil fuel-derived raw materials.

Citation List

Patent Literature

Patent Literature 1: JP 2022-13857 A
Patent Literature 2: JP 2022-27726 A

Summary

Technical Problem

According to the study conducted by the inventors, the thermal stability is insufficient by the techniques disclosed in Patent Literatures 1 and 2, and there is room for further improvement of thermal stability.

Under such a circumstance, the present disclosure provides a resin composition having excellent thermal stability even in the case of an EVOH resin using a biomass-derived raw material.

Solution to Problem

As a result of intensive studies in view of such circumstances, the present inventors have found that when a specific trace amount of a titanium compound is blended in an EVOH resin which is partially composed of a biomass-derived raw material, excellent thermal stability is achieved.

That is, the present disclosure provides the following aspects.

[1] A composition containing an EVOH resin and a titanium compound, wherein

at least a portion of the EVOH resin is derived from biomass, and
a content of the titanium compound in terms of metal is 0.0001 ppm or more and less than 1 ppm relative to a mass of the composition.

[2] The composition according to [1], wherein the content of the titanium compound in terms of metal is 0.0001 ppm or more and 0.8 ppm or less relative to the mass of the composition.

[3] The composition according to [1] or [2], further containing an alkaline earth metal compound (A) in the composition, wherein a mass ratio of a content of the alkaline earth metal compound (A) in terms of metal to the content of the titanium compound in terms of metal is from 500 to 55000.

[4] The composition according to any of [1] to [3], further containing a metal compound (B) belonging to period 4 d-block of the long-form periodic table other than the titanium compound in the composition, wherein a mass ratio of a content of the metal compound (B) belonging to period 4 d-block of the long-form periodic table in terms of metal to the content of the titanium compound in terms of metal is from 2 to 45000.

[5] The composition according to any of [1] to [4], further containing a lubricant (C) other than the alkaline earth metal compound (A) in the composition, wherein a mass ratio of a content of the lubricant (C) to the content of the titanium compound in terms of metal is from 500 to 280000.

[6] The composition according to any of [1] to [5], further containing a polyamide resin (D) in the composition.

[7] The composition according to any of [1] to [6], further containing a polyolefin resin (E) in the composition.

[8] The composition according to any of [1] to [7], further containing an olefin elastomer (F) in the composition.

[9] The composition according to any of [1] to [8], wherein the EVOH resin has a biobased content of from 0.01 to 99%.

[10] The composition according to any of [1] to [8], wherein the EVOH resin has a biobased content of from 1 to 99%.

[11] A molding material containing the composition according to any of [1] to [10].

[12] A multilayer structure including a layer containing the composition according to any of [1] to [10].

[13] The multilayer structure according to [12], further including an adhesive resin layer.

[14] A molded body including the multilayer structure according to [12] or [13].

[15] A food packaging body including the multilayer structure according to [12] or [13].

[16] A method for producing the composition according to any of [1] to [10], the method including mixing the EVOH resin and the titanium compound.

[17] A method for producing the multilayer structure according to [12] or [13], the method including melt-molding a layer containing the composition.

Advantageous Effects

The composition of the present disclosure is excellent in thermal stability. In addition, a molding material formed of the composition of the present disclosure and a multilayer structure, a molded body, and a food packaging body having a layer containing the composition of the present disclosure are also excellent in thermal stability.

Description of Embodiments

The present disclosure will be described below with reference to embodiments for carrying out the present disclosure. However, the present disclosure is not limited to the embodiments described below.

In the present specification, the wording "x and/or y (with x and y being any configurations)" means at least one selected from x and y, and includes the three meanings of only x, only y, and both x and y.

Unless otherwise specified, the expression "from X to Y" (with X and Y being any numbers) includes the meaning of "X or more and Y or less" and the meaning of "preferably more than X" or "preferably less than Y".

The expression "X or more" (X is any number) or "Y or less" (Y is any number) encompasses "preferably more than X" or "preferably less than Y".

In the present specification, with respect to numerical ranges described in steps, the upper limit value or the lower limit value of a numerical range of a certain step can be optionally combined with the upper limit value or the lower limit value of a numerical range of another step. In addition, in a numerical range described in the present specification, the upper limit value or the lower limit value of the numerical range can be replaced with a value presented in the Examples.

In the present specification, the term "layer" means that a relatively thin layer such as a "film", a "tape", or a "sheet" is included in addition to a thick layer.

Composition

A composition according to an embodiment of the present disclosure (hereinafter, the composition may be referred to as "the present composition") contains an EVOH resin as an essential component, and contains a specific trace amount of a titanium compound.

That is, in the present composition, the content of the EVOH resin in the present composition is usually 1 mass% or more, preferably 10 mass% or more, more preferably 50 mass% or more, still more preferably 60 mass% or more, particularly preferably 70 mass% or more, especially preferably 80 mass% or more, yet especially preferably 90 mass% or more, yet still more preferably 95 mass% or more. The upper limit value is 100 mass%, and may be 99 mass%, for example, from 1 to 100 mass% or from 10 to 99 mass%.

As described above, the case where the present composition contains an EVOH resin as an essential component

and a specific trace amount of a titanium compound is defined as a "first aspect", the case where an alkaline earth metal compound (A) is further contained in the first aspect is defined as a "second aspect", the case where a metal compound (B) belonging to period 4 d-block of the long-form periodic table other than the titanium compound is further contained in the first aspect is defined as a "third aspect", the case where a lubricant (C) other than the alkaline earth metal compound is further contained in the first aspect is defined as a "fourth aspect", the case where a polyamide resin (D) is further contained in the first aspect is defined as a "fifth aspect", the case where a polyolefin resin (E) is further contained in the first aspect is defined as a "sixth aspect", and the case where an olefin elastomer (F) is further contained in the first aspect is defined as a "seventh aspect". These aspects will be sequentially described.

First Aspect

The first aspect includes the following aspects [I-1] to [I-11].

[I-1]
A composition containing an EVOH resin and a titanium compound, wherein

at least a portion of the EVOH resin is derived from biomass, and
a content of the titanium compound in terms of metal is 0.0001 ppm or more and less than 1 ppm relative to a mass of the composition.

[I-2]
The composition according to [I-1], wherein the content of the titanium compound in terms of metal is 0.0001 ppm or more and 0.8 ppm or less relative to the mass of the composition.
[I-3]
The composition according to [I-1] or [I-2], wherein the EVOH resin has a biobased content of from 0.01 to 99%.
[I-4]
The composition according to any of [I-1] to [I-3], wherein the EVOH resin has a biobased content of from 1 to 99%.
[I-5]
A molding material containing the composition described in any of [I-1] to [I-4].
[I-6]
A multilayer structure including a layer containing the composition described in any of [I-1] to [I-4].
[I-7]
The multilayer structure according to [I-6], further including an adhesive resin layer.
[I-8]
A molded body including the multilayer structure described in [I-6] or [I-7].
[I-9]
A food packaging body including the multilayer structure described in [I-6] or [I-7].
[I-10]
A method for producing the composition described in any of [I-1] to [I-4], the method including a step of mixing the EVOH resin and the titanium compound.
[I-11]
A method for producing the multilayer structure described in [I-6] or [I-7], the method including a step of melt-molding a layer containing the composition.

Hereinafter, the first aspect will be described based on embodiments for carrying out the first aspect. However, the present disclosure is not limited to the embodiments described below.

Composition

The composition according to the first aspect of the present disclosure (hereinafter may be referred to as "the present composition (1)") contains an EVOH resin as an essential component, and contains a specific trace amount of a titanium compound.
That is, in the present composition (1), the content of the EVOH resin in the present composition (1) is usually 1 mass% or more, preferably 10 mass% or more, more preferably 50 mass% or more, still more preferably 60 mass% or more, particularly preferably 70 mass% or more, especially preferably 80 mass% or more, yet especially preferably 90 mass% or more, yet still more preferably 95 mass% or more. The upper limit value is 100 mass%, and may be 99 mass%, for example, from 1 to 100 mass% or from 10 to 99 mass%.
Hereinafter, the respective components will be described.

EVOH Resin

In the EVOH resin used in the present embodiment, at least a portion of the EVOH resin is derived from biomass. More specifically, the EVOH resin refers to an EVOH resin in which at least a portion of the ethylene structural unit, the vinyl alcohol structural unit, and the vinyl ester structural unit of the EVOH resin is derived from biomass.

The EVOH resin is a water-insoluble thermoplastic resin obtained by saponifying an ethylene-vinyl ester copolymer, which is a copolymer of ethylene and vinyl ester at least partially derived from biomass.

The fact that the ethylene and/or vinyl ester used as the raw material is derived from biomass can be confirmed by measuring the biobased content. The biobased content is an index representing the proportion of a biomass-derived raw material, and in the present specification, it is a biobased carbon content determined by measuring the concentration of radioactive carbon [$^{14}$C (hereinafter, referred to as "carbon-14")] with an accelerator mass spectrometer (AMS). The biobased content can be specifically measured according to the method described in ASTM D6866-18. That is, usually, when the biobased content of the EVOH resin is more than 0% and 100% or less, it can be said that the ethylene and/or vinyl ester used as a raw material is derived from biomass.

The term "biomass" refers to a resource that is organic matter derived from animals and plants, excluding resources derived from fossil fuel (fossil resources). From the viewpoint of cost and environment, it is preferable that biomass is a resource that is organic matter derived from plants, i.e., derived from a biomass raw material.

Biomass-derived ethylene can be produced by, for example, purifying bioethanol from a biomass raw material and performing a dehydration reaction.

Biomass-derived vinyl ester is produced by for example, a method in which ethylene, acetic acid, and oxygen molecules are caused to react using a palladium catalyst, which is a general industrial method.

Examples of the biomass raw material include waste type, unused type, and resource crop type biomass raw materials, and examples thereof include cellulose-based crops (pulp, kenaf, straw, rice straw, waste paper, paper residue, and the like), wood, charcoal, compost, natural rubber, cotton, sugar cane, soy pulp, fats and oils (rapeseed oil, cottonseed oil, soybean oil, coconut oil, castor oil, and the like), carbohydrate-based crops (corn, potatoes, wheat, rice, chaff, rice bran, old rice, cassava, sago palm, and the like), bagasse, buckwheat, soybean, essential oil (pine oil, orange oil, eucalyptus oil, and the like), pulp black liquor, and vegetable oil residue. These may be used alone or in combination of two or more types.

Examples of the method for producing bioethanol include a method in which a biomass raw material is subjected to a pretreatment (pressurized hot water treatment, acid treatment, alkali treatment, and saccharification treatment using a saccharifying enzyme) as necessary, and then subjected to yeast fermentation to produce bioethanol, and then the bioethanol is purified through a distillation step and a dehydration step. When a saccharification treatment is performed in the production of bioethanol, successive saccharification fermentation in which saccharification and fermentation are performed stepwise may be used, or parallel saccharification fermentation in which saccharification and fermentation are simultaneously performed may be used, but it is preferable to produce bioethanol through parallel saccharification fermentation from the viewpoint of production efficiency.

The proportion of the biomass-derived ethylene structural unit in all the ethylene structural units constituting the EVOH resin is usually from 0.001 to 100 mol%, preferably from 5 to 98 mol%, more preferably from 15 to 97 mol%, still more preferably from 25 to 96 mol%, particularly preferably from 35 to 95 mol%, although all the ethylene structural units may be derived from biomass. The proportion of the fossil fuel-derived ethylene structural unit in all the ethylene structural units constituting the EVOH resin is usually 99.999 mol% or less, preferably 95 mol% or less, more preferably 85 mol% or less, still more preferably 75 mol% or less, particularly preferably 65 mol% or less. The lower limit value is 0 mol%, and the proportion is, for example, from 0 to 99.999 mol%. The fossil fuel-derived ethylene structural unit may not be contained in all the ethylene structural units. When the proportion of the biomass-derived ethylene structural unit increases in all the ethylene structural units constituting the EVOH resin, the biobased content in the present composition (1) tends to increase, leading to reduction of environmental load. When the EVOH resin contains a biomass-derived vinyl ester structural unit and/or vinyl alcohol structural unit, the proportion of the biomass-derived ethylene structural unit in all the ethylene structural units may be 0.

As the vinyl ester other than the biomass-derived vinyl ester, vinyl acetate is typically used from the viewpoint of market availability and good impurity treatment efficiency at the time of production. Examples of the vinyl ester other than the vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester that can be used has usually from 3 to 20 carbons, preferably from 4 to 10 carbons, and more preferably from 4 to 7 carbons. A single type of these is usually used alone; however, as necessary, a plurality of types of these may be used simultaneously.

Examples of the biomass-derived vinyl ester include vinyl esters produced using biomass-derived ethylene. Specific examples include vinyl acetate in which the carbon of the vinyl group moiety is derived from biomass.

Examples of the method for producing a biomass-derived vinyl ester include a method of reacting ethylene, acetic acid, and oxygen molecules using a palladium catalyst, which is a general industrial production method. The biomass-derived vinyl ester may be a vinyl ester produced using a biomass-derived carboxylic acid. When the saponification degree of the EVOH resin is not 100 mol%, an acyl group derived from biomass remains.

The proportion of the biomass-derived vinyl alcohol structural unit in all the vinyl alcohol structural units (vinyl ester structural units) constituting the EVOH resin is usually from 0.001 to 100 mol%, preferably from 5 to 98 mol%, more preferably from 15 to 97 mol%, still more preferably from 25 to 96 mol%, particularly preferably from 35 to 95 mol%. The proportion of the fossil fuel-derived vinyl alcohol structural unit in all the vinyl alcohol structural units constituting the EVOH resin is usually 99.999 mol% or less, preferably 95 mol% or less, more preferably 85 mol% or less, still more preferably 75 mol% or less, particularly preferably 65 mol% or less. The lower limit value is 0 mol%, and the proportion is, for example, from 0 to 99.999 mol%. The fossil fuel-derived vinyl alcohol structural unit may not be contained in all the vinyl alcohol structural units. When the proportion of the biomass-derived vinyl alcohol structural unit increases in all the vinyl alcohol structural units constituting the EVOH resin, the biobased content in the present composition (1) tends to increase, leading to reduction of environmental load.

When the EVOH resin contains a biomass-derived ethylene structural unit, the proportion of the total of the biomass-derived vinyl ester structural unit and the biomass-derived vinyl alcohol structural unit to the total of the vinyl ester structural unit and the vinyl alcohol structural unit may be 0.

The fact that the EVOH resin is derived from biomass can be confirmed by determining the presence of "sulfur compound" and/or "carbon-14" in the present composition (1).

The "sulfur compound" and/or "carbon-14" is an impurity derived from biomass, and their presence cannot be confirmed in a petroleum-derived EVOH resin. Their presence can be confirmed because the EVOH resin is derived from biomass.

It is considered that EVOH resins have a problem with thermal stability, and it is presumed that the main cause of thermal decomposition is a polyene structure formed in the main chain of the EVOH resin through dehydration reaction starting from a hydroxyl group. It is presumed that the use of a biomass-derived EVOH resin in the present composition (1) reduces the thermal decomposition rate of the EVOH resin itself because of the primary isotope effect of carbon-14 (increase in binding energy), thereby improving the thermal stability.

The ethylene structural unit content of the EVOH resin is usually from 20 to 60 mol%, preferably from 25 to 50 mol%, particularly preferably from 25 to 35 mol%. When the content is equal to or more than the lower limit value, excellent gas barrier properties under high humidity and melt moldability tend to be achieved, and conversely, when the content is equal to or less than the upper limit value, excellent gas barrier properties tend to be achieved.

In the present embodiment, the ethylene structural unit content of the EVOH resin means a value measured based on ISO14663.

The saponification degree of the EVOH resin is usually from 90 to 100 mol%, preferably from 95 to 100 mol%, more preferably from 99 to 100 mol%. When the saponification degree is equal to or more than the lower limit value, excellent gas barrier properties, thermal stability, moisture resistance, and the like tend to be achieved.

The saponification degree of the EVOH resin can be measured based on JIS K 6726 (provided that the EVOH resin is used in the form of a solution with the EVOH resin uniformly dissolved in a water/methanol solvent).

The melt flow rate (MFR) (at 210°C and a load of 2160 g) of the EVOH resin is usually from 0.5 to 100 g/10 min, preferably from 1 to 50 g/10 min, more preferably from 3 to 35 g/10 min. When the MFR is equal to or less than the upper limit value, the stability during film formation tends to be excellent, whereas when the MFR is equal to or more than the lower limit value, an appropriate viscosity is achieved, and the melt extrusion tends to be excellent.

The MFR is an index of the polymerization degree of the EVOH resin, and can be adjusted with the amount of a polymerization initiator or the amount of a solvent when ethylene and vinyl ester are copolymerized.

The biobased content of the EVOH resin is usually from 0.001 to 100%, preferably from 1 to 99%, more preferably from 20 to 86%, still more preferably from 38 to 76%, particularly preferably from 58 to 66%. The upper limit value is 100%.

The EVOH resin may further contain a structural unit derived from a comonomer described below within a range such that the effects of the present disclosure are not impaired (e.g., in an amount of 10 mol% or less of the EVOH resin).

Examples of the comonomer include olefins such as propylene, 1-butene, and isobutene; hydroxy group-containing $\alpha$-olefins such as 3-butene-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers, such as alkyl vinyl ethers having an alkyl group with 1 to 18 carbons, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more types.

In particular, hydroxy group-containing $\alpha$-olefins are preferred, and 3-butene-1,2-diol and 5-hexene-1,2-diol are particularly preferred. In a case where the hydroxy group-containing $\alpha$-olefins are copolymerized, the resulting EVOH resin has a primary hydroxyl group in a side chain. Such an EVOH resin having a primary hydroxyl group in a side chain, particularly an EVOH resin having a 1,2-diol structure in a side chain, is preferred because good secondary moldability is achieved while gas barrier properties are maintained.

When the EVOH resin has a primary hydroxyl group in a side chain, the content of the structural unit derived from the monomer having a primary hydroxyl group is usually from 0.1 to 20 mol%, preferably from 0.5 to 15 mol%, particularly preferably from 1 to 10 mol% of the EVOH resin.

As the EVOH resin, a "post-modified" EVOH resin, such as an esterified, urethanized, acetalized, cyanoethylated, or oxyalkylenated EVOH resin, may also be used.

In a case where the post-modified EVOH resin is used, the modification rate thereof is usually 10 mol% or less, and preferably 4 mol% or less. The lower limit is usually 0.01 mol% or more, preferably 0.1 mol% or more, and it is, for example, from 0.01 to 10 mol%, preferably from 0.1 to 4 mol%. When the modification rate of the EVOH resin is within the range described above, excellent thermal degradation prevention properties and long-run properties tend to be achieved.

Further, the EVOH resin may be a mixture of EVOH resins having different contents of ethylene structural units, saponification degrees, polymerization degrees, copolymerization components, and the like.

As described above, the EVOH resin used in the present embodiment is obtained by saponifying a copolymer of ethylene and vinyl ester, at least a portion of which is derived from biomass. As a polymerization method for copolymerization, any known polymerization method, for example, solution polymerization, suspension polymerization, emulsion polymerization, or the like can be used.

Examples of the polymerization solvent usually include lower alcohols such as methanol, ethanol, propanol, and butanol, and ketones such as acetone and methyl ethyl ketone. One type may be used alone, or two or more types may be used in combination. Methanol is industrially suitably used as the polymerization solvent.

The amount of the polymerization solvent used may be appropriately selected in accordance with the polymerization degree of the intended copolymer in consideration of the chain transfer constant of the polymerization solvent. For example, when the polymerization solvent is methanol, the amount of the polymerization solvent is selected from the range of S (polymerization solvent)/M (monomer) = from 0.01 to 10 (mass ratio), preferably from about 0.05 to 7 (mass ratio).

Examples of the polymerization catalyst include known radical polymerization catalysts such as azobisisobutyronitrile, acetyl peroxide, benzoyl peroxide, and lauryl peroxide, and low-temperature active radical polymerization catalysts. Examples of the low-temperature active radical polymerization catalyst include peroxy esters such as t-butylperoxy neodecanoate, t-butylperoxy pivalate, $\alpha,\alpha'$-bis(neodecanoylperoxy)diisopropylbenzene, cumylperoxy neodecanoate, 1,1,3,3,-tetramethylbutylperoxy neodecanoate, 1-cyclohexyl-1-methylethylperoxy neodecanoate, t-hexylperoxy neodecanoate, and t-hexylperoxy pivalate, peroxy dicarbonates such as di-n-propylperoxy dicarbonate, di-isopropylperoxy dicarbonate, di-sec-butylperoxy dicarbonate, bis(4-t-butylcyclohexyl)peroxy dicarbonate, di-2-ethoxyethylperoxy dicarbonate, di(2-ethylhexyl)peroxy dicarbonate, dimethoxybutylperoxy dicarbonate, di(3-methyl-3-methoxybutylperoxy) dicarbonate, organic peroxides such as diacyl peroxides such as 3,3,5-trimethylhexanoyl peroxide, diisobutyryl peroxide, and lauroyl peroxide, and azo compounds such as 2,2'-azobis-(2,4-dimethylvaleronitrile) and 2,2'-azobis-(4-methoxy-2,4-dimethylvaleronitrile). The low-temperature active radical polymerization catalyst means an organic compound having a half-life at 60°C of from 10 to 300 minutes. One type of these polymerization catalysts may be used alone, or two or more types thereof may be used in combination.

The amount of the polymerization catalyst to be used varies depending on the type of catalyst and cannot be determined unconditionally, but is optionally selected according to the polymerization rate. For example, when azobisisobutyronitrile or acetyl peroxide is used, the amount thereof is preferably from 0.001 to 0.2 parts by mass, more preferably from 0.005 to 0.1 parts by mass, relative to 100 parts by mass of the vinyl ester-based monomer.

As a method for introducing ethylene into the copolymer, normal ethylene pressure polymerization may be performed. The introduction amount thereof can be controlled by the pressure of ethylene. It cannot be said unconditionally because it depends on the intended content of the ethylene structural unit, but it is usually selected from the range of from 2.0 to 8.0 MPa.

The reaction temperature of the copolymerization reaction cannot be determined unconditionally because it depends on the polymerization solvent to be used and the pressure, but the reaction is usually performed at a temperature equal to or lower than the boiling point of the polymerization solvent, and the reaction temperature is usually preferably from 40 to 80°C, particularly preferably from 55 to 80°C. When the temperature is equal to or more than the lower limit value, polymerization proceeds appropriately, and thus it is not necessary to set a large amount of catalyst for shortening the polymerization time. Conversely, when the temperature is equal to or less than the upper limit value, excellent polymerization control tends to be achieved.

In the case of a batch type, the polymerization time is usually from 4 to 10 hours, more preferably from 6 to 9 hours. When the polymerization time is equal to or more than the lower limit value, there is a tendency that it is not necessary to increase the polymerization temperature or set a large amount of catalyst. Conversely, when the polymerization time is equal to or less than the upper limit value, excellent productivity tends to be achieved. In the case of the continuous type, the average residence time in the polymerization can is usually from 2 to 8 hours, more preferably from 2 to 6 hours. When the residence time is equal to or more than the lower limit value, there is a tendency that it is not necessary to increase the polymerization temperature or set a large amount of catalyst. Conversely, when the polymerization time is equal to or less than the upper limit value, excellent productivity tends to be achieved.

The polymerization rate is set as high as possible within a range in which polymerization control is possible from the viewpoint of productivity, and is preferably from 30 to 60%. When the polymerization rate is equal to or more than the lower limit value, productivity is excellent, and there is a tendency to prevent a large amount of unpolymerized vinyl ester-based monomer from remaining. Conversely, when the polymerization rate is equal to or less than the upper limit value, excellent polymerization control tends to be achieved.

The thus-obtained ethylene-vinyl ester copolymer is saponified, whereby the EVOH resin of the present embodiment can be obtained. The saponification is performed using a saponification catalyst in a state where the ethylene-vinyl ester copolymer obtained as described above is dissolved in an alcohol or a hydrous alcohol.

Examples of the alcohol include lower alcohols having from 1 to 5 carbons, such as methanol, ethanol, and propanol. One of these may be used alone, or two or more types of these may be used in combination. Among these, methanol is preferable.

The concentration of the ethylene-vinyl ester copolymer in the alcohol is appropriately selected depending on the viscosity, and is usually from 5 to 60 mass%.

Examples of the saponification catalyst include alkali catalysts such as hydroxides and alcoholates of alkali metals, such as sodium hydroxide, potassium hydroxide, sodium methylate, sodium ethylate, potassium methylate, and potassium ethylate; and acid catalysts such as sulfuric acid, hydrochloric acid, nitric acid, methanesulfonic acid, zeolite, and cation exchange resins. One of these may be used alone, or two or more types of these may be used in combination.

Among these, alkali catalysts such as hydroxides and alcoholates of alkali metals are preferable.

The temperature at which the saponification is performed is not limited, but is preferably from 20 to 140°C, and the saponification time is preferably from 1 to 5 hours.

The thus-produced EVOH resin may be at least partially derived from biomass, and the ethylene structural unit and/or the vinyl alcohol structural unit is preferably derived from biomass, and more preferably the vinyl alcohol structural unit is derived from biomass from the viewpoint of availability. Such an EVOH resin mainly contains an ethylene structural unit and a vinyl alcohol structural unit, and contains a slight amount of a vinyl ester structural unit remaining without being saponified as necessary. When the other comonomer is copolymerized, a structural unit derived from the comonomer is further contained.

In the present specification, the term "mainly" refers to the most abundant constituent in an object, and usually, the constituent is preferably 50 mass% or more, more preferably 60 mass% or more, still more preferably 70 mass% or more, particularly preferably 80 mass% or more, especially preferably 90 mass% or more, and it may be 100 mass%, in the object.

The EVOH resin produced by the aforementioned production method is contained in an alcohol solvent, and the content of the EVOH resin in the EVOH resin solution is preferably about from 10 to 50 mass% from the viewpoint of producing the EVOH resin pellets described below.

The EVOH resin used in the present composition (1) may be the alcohol solution of the EVOH resin produced by the production method as it is, but is preferably in the form of pellets.

The shape and size of the pellets are preferably the same as the shape and size of the composition (1) described below.

The produced pellets are preferably washed by a method of immersing the pellets in an aqueous solution of a chemical such as an acid and/or a salt thereof, and examples of the chemical include formic acid, acetic acid, adipic acid, phosphoric acid, boric acid, and salts thereof. Acetic acid is preferably used. Further, it is preferable to thereafter wash the pellets with water or the like.

Next, the pellets subjected to the chemical treatment and washing may be dried as appropriate, and as a drying method, it is preferable to dry the pellets using a fluidized hot air dryer or a stationary hot air dryer.

The pellets of the EVOH resin can be thus produced.

Titanium Compound

Examples of the titanium compound include inorganic titanium compounds and organic titanium compounds. The titanium compounds may be used alone or in combination of two or more types. Among these, an inorganic titanium compound is preferable.

Examples of the inorganic titanium compound include a titanium oxide, a titanium hydroxide, a titanium chloride, and an inorganic salt of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

Examples of the inorganic titanium salt include titanium phosphate and titanium sulfate.

Among these, titanium oxides are preferable, titanium(IV) oxide is more preferable, rutile-type titanium(IV) oxide is particularly preferable.

Examples of the organic titanium compound include titanium carboxylates such as titanium acetate, titanium butyrate, and titanium stearate.

The titanium compound may be present as a titanium compound in the composition (1), or may be present in an ionized state or in a complex state in which the titanium compound is caused to interact with the EVOH resin or another ligand.

The average particle size of the titanium compound is usually from 0.001 to 100 $\mu$m, preferably from 0.01 to 50 $\mu$m, more preferably from 0.015 to 20 $\mu$m. When the average particle size of the titanium compound is in the range described above, more excellent coloring suppression effect tends to be achieved. Examples of the method for measuring the average particle size include a dynamic light scattering (DLS) method and a sedimentation rate method. The average particle size can be determined by a predetermined method.

The content of the titanium compound in terms of metal is 0.0001 ppm or more and less than 1 ppm, preferably from 0.0001 to 0.8 ppm, more preferably from 0.0005 to 0.5 ppm, still more preferably from 0.001 to 0.3 ppm, particularly preferably from 0.005 to 0.2 ppm, especially preferably from 0.01 to 0.1 ppm, relative to the mass of the composition (1). When the content of the titanium compound is equal to or less than the upper limit value, the thermal decomposition of the EVOH resin is prevented, and excellent coloring prevention properties tend to be achieved. When the content is equal to or more than the lower limit value, the thermal degradation tends to be suppressed. The content of the titanium compound in terms of metal is the content of the titanium element.

The content of the titanium compound in terms of metal can be determined by weighing the present composition (1) in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, and measuring the titanium in a constant volume liquid obtained by fixing the volume of the treated material by ICP mass spectrometry using an ICP mass spectrometer (Agilent 8800, manufactured by Agilent Technologies).

The titanium is stable as a tetravalent ion, is coordinated to a double bond when a polyene structure is formed in the main chain of the EVOH resin as described above even in a trace amount, and is stabilized by forming a chelate or the like. Thus, it is presumed that the titanium suppresses the formation of a polyene structure in the main chain of the EVOH resin.

Additional Thermoplastic Resin

The present composition (1) can contain a thermoplastic resin other than the EVOH resin within a range such that the effects of the present disclosure are not impaired (for example, usually 50 mass% or less, preferably 30 mass% or less, more preferably 20 mass% or less, particularly preferably 10 mass% or less of the present composition (1). The lower limit value is 0 mass%, for example, from 0 to 50 mass%). As the additional thermoplastic resin, a known thermoplastic resin can be used, and examples thereof include polyester-based resins, polystyrene-based resins, polyvinyl chloride-based resins, polycarbonate-based resins, ionomers, polyvinylidene chloride, polyester-based elastomers, polyurethane-based elastomers, chlorinated polyethylene, and chlorinated polypropylene. These may be used alone or in combination of two or more types.

Additional Compounding Agent

The present composition (1) may contain a compounding agent (the compounding agent as used herein is used in the sense of excluding the titanium compound) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogencontaining resins and transition metals (e.g., a combination of polypropylene and cobalt), blends of carbon-carbon unsaturated bond-containing resins and transition metals (e.g., a combination of polybutadiene and cobalt), photooxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, anti-blocking agents, and filling agents (e.g., aluminum and inorganic fillers). One of these compounds may be used alone or two or more types thereof may be used in combination.

Method for Producing Composition

The present composition (1) can be produced by, for example, mixing the EVOH resin and the titanium compound by a known method, for example, a dry blending method, a melt mixing method, a solution mixing method, an impregnation method, or the like. Among these, it is preferable to produce the present composition (1) by a method including a step of mixing the EVOH resin and the titanium compound. Furthermore, these production methods can be optionally combined.

Examples of the dry blending method include (i) a method of dry-blending a pellet-shaped EVOH resin and a titanium compound using a tumbler or the like.

Examples of the melt mixing method include (ii) a method of melt-kneading a dry blend obtained by dry-blending a pellet-shaped EVOH resin and a titanium compound, and (iii) a method of melt-kneading a titanium compound added to a molten EVOH resin.

Examples of the solution mixing method include (iv) a method of preparing a solution using a commercially available EVOH resin, blending a titanium compound therein, performing solidification molding, then performing solid-liquid separation with a known means, and drying the obtained product; and (v) a method of, in the process of producing an EVOH resin, incorporating a titanium compound in an ethylene-vinyl ester copolymer solution or a uniform solution of the EVOH resin (water-alcohol solution or the like) before saponification, performing solidification molding, then performing solid-liquid separation with a known means, and drying the obtained product.

Examples of the impregnation method include (vi) a method of bringing a pellet-shaped EVOH resin into contact with an aqueous solution containing a titanium compound, incorporating the titanium compound in the EVOH resin, and then drying the EVOH resin.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present embodiment, the above different methods can be combined. Among those, a melt-mixing method is preferable, and the method (ii) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition (1) produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (1) is not particularly limited, but is usually from 0.01 to 0.5 mass%, preferably from 0.05 to 0.35 mass%, particularly preferably from 0.1 to 0.3 mass%.

The water content of the present composition (1) is measured and calculated by the following method.

The mass ($W_1$) of the present composition (1) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (1) is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition (1). The lower limit is usually 0 mass%, for example, from 0 to 5 mass%.

The present composition (1) thus produced is excellent in thermal stability, and the temperature difference (°C) between the temperature at which the mass of the present composition (1) is reduced by 5% and the temperature at which the mass is reduced by 10% is usually 12°C or more, preferably 12.5°C or more, more preferably 13°C or more.

The upper limit of the temperature difference (°C) between the temperature at which the mass is reduced by 5% and the temperature at which the mass is reduced by 10% is preferably as high as possible, but it may be usually 20°C or less or 16°C or less, and is, for example, from 12 to 20°C or from 12.5 to 16°C.

Molding Material

The present composition (1) thus produced is prepared into various forms such as a pellet, a powder form, or a liquid form, and is provided as a molding material for various molded products. In particular, in the present embodiment, in a case where the composition is provided as a material for use in melt molding, the effects of the present disclosure tend to be more efficiently achieved, which is preferable.

Examples of the molded product include a single layer film molded from the present composition (1), and a multilayer structure having a layer composed of the present composition (1).

Multilayer Structure

A multilayer structure according to the first aspect of the present disclosure (hereinafter, referred to as "present multilayer structure (1)") contains the present composition (1) and includes at least one layer composed of the present composition (1). The layer composed of the present composition (1) in the present multilayer structure (1) (hereinafter, simply referred to as "present composition layer (1)") may be a single layer or a plurality of layers. When the present composition layer (1) is laminated with an additional substrate containing a thermoplastic resin other than the EVOH resin as a main component (hereinafter, the resin used for the substrate may be abbreviated as "substrate resin"), it is possible to further impart strength, protect the present composition layer (1) from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-α-olefin (α-olefin having from 4 to 20 carbons) copolymers; polypropylene-based resins, such as polypropylene and propylene-α-olefin (α-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer (1) is denoted by a (a1, a2, ...), and the substrate resin layer is denoted by b (b1, b2, ...), the layer configuration of the present multilayer structure (1) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition (1) and a thermoplastic resin other than the EVOH resin, which is produced by remelt-molding an end, a defective product, or the like generated in the process of producing the present multilayer structure (1), is denoted by R, the layer configuration can also be b/R/a, b/R/a/b, b/R/a/R/b, b/a/R/a/b, b/R/a/R/a/R/b, or the like. The number of layers of the present multilayer structure (1) is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure (1), when an adhesive resin layer is used between the present composition layer (1) and the substrate resin layer, the adhesive resin layer is located on both sides of the present composition layer (1), and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer (1) and the substrate resin layer (including a case of interposing an adhesive resin layer therebetween) can be performed by a known method. Examples thereof include a method of melt-extrusion-laminating the substrate resin to a film, a sheet, or the like of the present composition (1), a method of melt-extrusion-laminating the present composition (1) to the substrate resin layer, a method of coextruding the present composition (1) and the substrate resin, a method of dry-laminating the present composition (1) (the present composition layer (1)) and the substrate resin (substrate resin layer) using a known adhesive such as an organic titanium compound, an isocyanate compound, a polyester-based compound, or a polyurethane compound, and a method of applying a solution of the present composition (1) onto the substrate resin and then removing the solvent. Among these, production is preferably performed by a method including a step of melt molding a layer containing the present composition layer (1), and specifically by a co-extrusion method, from the viewpoints of cost and the environment.

The present multilayer structure (1) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure (1) and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure (1) after the stretching treatment may be subjected to heat setting for the purpose of imparting dimensional stability. The heat setting can be performed by a well-known means; for example, the stretch-treated present multilayer structure (1) is heat-treated usually at a temperature of from 80 to 180°C and preferably at a temperature of from 100 to 165°C usually for about 2 to 600 seconds while the stretch-treated present multilayer structure is kept in a state of tension.

In the case of using the stretch-treated present multilayer structure (1) as a shrink film, in order to impart heat shrinkability, the stretch-treated present multilayer structure is not subjected to the heat setting described above, but subjected to a treatment such as application of cool air to the present multilayer structure (1) after the stretching treatment to cool-set the structure.

The thickness of the present multilayer structure (1) (including a stretched multilayer structure), and the thicknesses of the present composition layer (1), the substrate resin layer, and the adhesive resin layer constituting the multilayer structure (1) cannot be determined unconditionally because they depend on the layer configuration, the type of the substrate resin, the type of the adhesive resin, the application, the packaging form, the required physical properties, and the like, but the thickness of the present multilayer structure (1) (including a stretched multilayer structure) is usually from 10 to 5000 $\mu$m, preferably from 30 to 3000 $\mu$m, particularly preferably from 50 to 2000 $\mu$m. The thickness of the present composition layer (1) is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer (1) to the substrate resin layer (the present composition layer (1)/the substrate resin layer) in the present multilayer structure (1) is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer (1) to the adhesive resin layer (the present composition layer (1)/the adhesive resin layer) in the present multilayer structure (1) is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure (1). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (1) or a packaging body such as a container or a lid member composed of the present multilayer structure (1), such as a bag, a cup, a tray, a tube, a bottle, or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Second Aspect

The second aspect includes the following aspects [II-1] to [II-12].

[II-1]
A composition containing an EVOH resin, a titanium compound, and an alkaline earth metal compound (A), wherein

at least a portion of the EVOH resin is derived from biomass,
a content of the titanium compound in terms of metal is 0.0001 ppm or more and less than 1 ppm relative to a mass of the composition, and
a mass ratio of a content of the alkaline earth metal compound (A) in terms of metal to the content of the titanium compound in terms of metal is from 500 to 55000.

[II-2]
The composition according to [II-1], wherein the content of the titanium compound in terms of metal is 0.0001 ppm or more and 5000 ppm or less relative to the mass of the composition.
[II-3]
The composition according to [II-1] or [II-2], wherein the content of the titanium compound in terms of metal is 0.0001 ppm or more and 0.8 ppm or less relative to the mass of the composition.
[II-4]
The composition according to any of [II-1] to [II-3], wherein the EVOH resin has a biobased content of from 0.01 to 99%.
[II-5]
The composition according to any of [II-1] to [II-4], wherein the EVOH resin has a biobased content of from 1 to 99%.
[II-6]
A molding material containing the composition described in any of [II-1] to [II-5].
[II-7]
A multilayer structure including a layer containing the composition described in any of [II-1] to [II-5].
[II-8]
The multilayer structure according to [II-7], further including an adhesive resin layer.
[II-9]
A molded body including the multilayer structure described in [II-7] or [II-8].
[II-10]
A food packaging body including the multilayer structure described in [II-7] or [II-8].
[II-11]
A method for producing the composition described in any of [II-1] to [II-5], the method including a step of mixing the EVOH resin and the titanium compound.
[II-12]
A method for producing the multilayer structure described in [II-7] or [II-8], the method including a step of melt-molding a layer containing the composition.

Hereinafter, the second aspect will be described based on embodiments for carrying out the second aspect. However, the present disclosure is not limited to the embodiments described below.

Composition

The composition according to the second aspect of the present disclosure (hereinafter may be referred to as "the present composition (2)") contains an EVOH resin as an essential component, and a specific trace amount of a titanium compound, wherein the alkaline earth metal compound (A) and the titanium compound are contained at a specific mass ratio.
That is, in the present composition (2), the content of the EVOH resin in the present composition (2) is usually 1 mass% or more, preferably 10 mass% or more, more preferably 50 mass% or more, still more preferably 60 mass% or more, particularly preferably 70 mass% or more, especially preferably 80 mass% or more, yet especially preferably 90 mass% or more, yet still more preferably 95 mass% or more. The upper limit value is 100 mass%, and may be 99 mass%, for example, from 1 to 100 mass% or from 10 to 99 mass%.
Hereinafter, the respective components will be described.

EVOH Resin

The EVOH resin used in the present embodiment is at least partially derived from biomass, and the same EVOH resin as the EVOH resin described in the first aspect can be used. The "present composition (1)" in the description of EVOH Resin of the first aspect is read as the "present composition (2)".

Titanium Compound

As the titanium compound used in the present embodiment, the same titanium compound as described in Titanium Compound of the first aspect can be used. The "present composition (1)" in the description of Titanium Compound of the first aspect is read as the "present composition (2)".

Alkaline Earth Metal Compound (A)

Examples of the alkaline earth metal compound (A) include salts and oxides of alkaline earth metals. One of these may be used alone, or two or more types of these may be used in combination. Among these, alkaline earth metal oxides are preferable from the viewpoint of economic efficiency and dispersibility.

Examples of the salt of the alkaline earth metal include an inorganic salt of an alkaline earth metal, and a carboxylate of an alkaline earth metal.

Examples of the inorganic salt of the alkaline earth metal include carbonates, hydrogen carbonates, phosphates, borates, sulfates, and chlorides of alkaline earth metals.

Examples of the carboxylate of the alkaline earth metal include saturated or unsaturated carboxylates having from 2 to 25 carbons, preferably saturated or unsaturated carboxylates having from 2 to 22 carbons, particularly preferably saturated or unsaturated carboxylates having from 6 to 20 carbons. Specific examples thereof include monovalent carboxylates such as acetates, butyrates, propionates, enanthates, caprates, laurates, palmitates, stearates, 12-hydroxystearates, behenates, and montanates, and divalent carboxylates such as oxalates, malonates, succinates, adipates, suberates, and sebacates. Among these, from the viewpoint of commercial availability, a linear saturated carboxylate is preferable, and a linear saturated monovalent carboxylate is more preferable.

Examples of the alkaline earth metal species of the alkaline earth metal compound (A) include beryllium, magnesium, calcium, strontium, barium, and radium. Among these, magnesium and calcium are preferable, and magnesium is particularly preferable, from the viewpoint of commercial availability and economic efficiency.

Among these, magnesium oxide is preferable as the alkaline earth metal compound (A). In addition, it is preferable that the alkaline earth metal compound (A) excludes a layered inorganic compound such as montmorillonite and a double salt such as hydrotalcite, from the viewpoint of economic efficiency and dispersibility.

As the form of the alkaline earth metal compound (A), for example, any form such as a solid form (powder, fine powder, flakes, and the like), a semisolid form, a liquid form, a paste form, a solution form, or an emulsion form (aqueous dispersion) can be used. Among these, a powder form is preferable.

The content of the alkaline earth metal compound (A) in terms of metal is preferably from 1 to 10000 ppm, more preferably from 5 to 3000 ppm, still more preferably from 10 to 2000 ppm, particularly preferably from 20 to 500 ppm, especially preferably from 30 to 300 ppm, relative to the mass of the composition (2).

When the content of the alkaline earth metal compound (A) in terms of metal is equal to or less than the upper limit value, excellent thermal stability tends to be achieved, whereas when the content is equal to or more than the lower limit value, excellent moldability of the composition (2) tends to be achieved.

The content of the alkaline earth metal compound (A) in terms of metal can be measured with an atomic absorption spectrophotometer, for example using a test liquid prepared by adding pure water to a solution obtained by subjecting a heated and ashed product of the present composition (2) to an acid treatment with hydrochloric acid or the like to fix the volume. The content of the alkaline earth metal compound (A) in terms of metal is the content of the alkaline earth metal element.

The mass ratio of the content of the alkaline earth metal compound (A) in terms of metal to the content of the titanium compound in terms of metal is preferably from 500 to 55000, more preferably from 800 to 50000, still more preferably from 1000 to 40000, particularly preferably from 1000 to 30000. When the mass ratio is equal to or less than the upper limit value, there is a tendency that coloring is easily suppressed, whereas when the mass ratio is equal to or more than the lower limit value, an effect of suppressing thermal degradation tends to be achieved.

It is generally known that an EVOH resin containing the alkaline earth metal compound (A) tends to decrease in viscosity with time during heating. Although the mechanism is not clear, it is presumed that the composition (2) becomes basic by blending the alkaline earth metal compound (A), and any anion becomes a nucleophilic agent to cause a decomposition reaction of the main chain by, for example, withdrawing hydrogen bound to the main chain carbon of the EVOH resin, thereby cutting the main chain of the EVOH resin. The deterioration of the EVOH resin after heating is presumed to be caused by the formation of a double bond structure in the main chain of the EVOH resin during the reaction, the double bond structure serving again as a reaction starting point of the dehydration reaction or the like, which forms a polyene structure in the main chain of the EVOH resin.

In contrast, the present composition (2) contains a specific trace amount of a titanium compound, wherein the alkaline earth metal compound (A) and the titanium compound are contained at a specific mass ratio. Thus, the decrease in the thermal stability of the EVOH resin is suppressed. Usually, it is considered that when a titanium compound is contained in the composition (2), the composition (2) is colored by titanium ions, and thus, it is common technical knowledge for those skilled in the art to avoid the use of a titanium compound.

However, in the present embodiment, it has been found that, contrary to such common technical knowledge, the composition (2) having excellent thermal stability can be obtained by using a specific trace amount of a titanium compound and using the alkaline earth metal compound (A) and the titanium compound at a specific mass ratio.

Titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed.

Meanwhile, it is considered that when the amount of the titanium compound is within the specific range, the deterioration of the EVOH resin due to thermal decomposition caused by titanium tends to be suppressed.

Additional Thermoplastic Resin

The present composition (2) can contain a thermoplastic resin other than the EVOH resin within a range such that the effects of the present disclosure are not impaired (for example, usually 50 mass% or less, preferably 30 mass% or less, more preferably 20 mass% or less, particularly preferably 10 mass% or less of the present composition (2). The lower limit value is 0 mass%, for example, from 0 to 50 mass%). As the additional thermoplastic resin, the same one as Additional Thermoplastic Resin described in the first aspect can be used.

Additional Compounding Agent

The present composition (2) may contain a compounding agent (the compounding agent as used herein is used in the sense of excluding the titanium compound and the alkaline earth metal compound (A)) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogen-containing resins and transition metals (e.g., a combination of polypropylene and cobalt), blends of carbon-carbon unsaturated bond-containing resins and transition metals (e.g., a combination of polybutadiene and cobalt), photo-oxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, anti-blocking agents, and filling agents (e.g., aluminum and inorganic fillers). One of these compounds may be used alone or two or more types thereof may be used in combination.

Method for Producing Composition

The present composition (2) can be produced by, for example, mixing the EVOH resin, the titanium compound, and the alkaline earth metal compound (A) by a known method, for example, a dry blending method, a melt mixing method, a solution mixing method, an impregnation method, or the like, and among these, it is preferable to produce the present composition (2) by a method including a step of mixing the EVOH resin and the titanium compound. Furthermore, these production methods can be optionally combined.

Examples of the dry blending method include (i) a method of dry-blending a pellet-shaped EVOH resin and a titanium compound and/or an alkaline earth compound using a tumbler or the like.

Examples of the melt mixing method include (ii) a method of melt-kneading a dry blend obtained by dry-blending a pellet-shaped EVOH resin and a titanium compound and/or an alkaline earth compound, and (iii) a method of melt-kneading a titanium compound and/or an alkaline earth compound added to a molten EVOH resin.

Examples of the solution mixing method include (iv) a method of preparing a solution using a commercially available EVOH resin, blending a titanium compound and/or an alkaline earth compound therein, performing solidification molding, then performing solid-liquid separation with a known means, and drying the obtained product; and (v) a method of, in the process of producing an EVOH resin, incorporating a titanium compound and/or an alkaline earth compound in an ethylene-vinyl ester copolymer solution or a uniform solution of the EVOH resin (water-alcohol solution or the like) before saponification, performing solidification molding, then performing solid-liquid separation with a known means, and drying the obtained product.

Examples of the impregnation method include (vi) a method of bringing a pellet-shaped EVOH resin into contact with an aqueous solution containing a titanium compound and/or an alkaline earth compound, incorporating the titanium compound and/or the alkaline earth compound in the EVOH resin, and then drying the EVOH resin.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present embodiment, the above different methods can be combined. Among those, a melt-mixing method is preferable, and the method (ii) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition (2) produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (2) is not particularly limited, but is usually from 0.01 to 0.5 mass%, preferably from 0.05 to 0.35 mass%, particularly preferably from 0.1 to 0.3 mass%.

The water content of the present composition (2) is measured and calculated by the following method.

The mass ($W_1$) of the present composition (2) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (2) is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition (2). The lower limit is usually 0 mass%, for example, from 0 to 5 mass%.

The present composition (2) thus produced is excellent in thermal stability, and the ratio ("1381" + "1382")/("1636" + "1637" + "1638") of the sum of the color number "1381" (R: 88, G: 104, B: 88) and the color number "1382" (R: 88, G: 104, B: 104) to the sum of the color number "1636" (R: 104, G: 104, B: 72), the color number "1637" (R: 104, G: 104, B: 88), and the color number "1638" (R: 104, G: 104, B: 104) measured using a visual analyzer IRIS VA400 (available from Alpha mos) of the present composition (2) is usually 1.0 or less, preferably 0.8 or less, more preferably 0.6 or less. The lower limit value is usually 0, for example, usually from 0 to 1.0.

As the ratio is smaller, coloring associated with thermal degradation is suppressed, and thermal stability tends to be higher.

The difference of 0.1 in the ratio appears as a large difference in yield in actual production, and thus the difference is very large.

Molding Material

The present composition (2) thus produced is prepared into various forms such as a pellet, a powder form, or a liquid form, and is provided as a molding material for various molded products. In particular, in the present embodiment, in a case where the composition is provided as a material for use in melt molding, the effects of the present disclosure tend to be more efficiently achieved, which is preferable.

Examples of the molded product include a single layer film molded from the present composition (2), and a multilayer structure having a layer composed of the present composition (2).

Multilayer Structure

A multilayer structure according to the second aspect of the present disclosure (hereinafter, referred to as "present multilayer structure") contains the present composition (2) and includes at least one layer composed of the present composition (2). The layer composed of the present composition (2) in the present multilayer structure (hereinafter, simply referred to as "present composition layer") may be a single layer or a plurality of layers. When the present composition layer is laminated with an additional substrate containing a thermoplastic resin other than the EVOH resin as a main component (hereinafter, the resin used for the substrate may be abbreviated as "substrate resin"), it is possible to further impart strength, protect the present composition layer from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer is denoted by a (a1, a2, ...), and the substrate resin layer is denoted by b (b1, b2, ...), the layer configuration of the present multilayer structure may be any combination such as a/b, b/a/b, a/b/a, a1/a2/b, a/b1/b2, or b2/b1/a/b1/b2. When a recycled layer containing a mixture of the present composition and a thermoplastic resin other than the EVOH resin, which is produced by remelt-molding an end, a defective product, or the like generated in the process of producing the present multilayer structure, is denoted by R, the layer configuration can also be b/R/a, b/R/a/b, b/R/a/R/b, b/a/R/a/b, b/R/a/R/a/R/b, or the like. The number of layers of the present multilayer structure is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure, when an adhesive resin layer is used between the present composition layer and the substrate resin layer, the adhesive resin layer is positioned on both sides of the present composition layer, and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer and the substrate resin layer (including a case of interposing an adhesive resin layer therebetween) can be performed by a known method. Examples thereof include a method of melt-extrusion-laminating the substrate resin to a film, a sheet, or the like of the present composition (2), a method of melt-extrusion-laminating the present composition (2) to the substrate resin layer, a method of co-extruding the present composition (2) and the substrate resin, a method of dry-laminating the present composition (2) (the present composition layer) and the substrate resin (substrate resin layer) using a known adhesive such as an organic titanium compound, an isocyanate compound, a polyester-based compound, or a polyurethane compound, and a method of applying a solution of the present composition (2) onto the substrate resin and then removing the solvent. Among these, production is preferably performed by a method including a step of melt molding a layer containing the present composition layer, and specifically by a co-extrusion method, from the viewpoints of cost and the environment.

The present multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure after the stretching treatment may be subjected to heat setting for the purpose of imparting dimensional stability. The heat setting can be carried out by a well-known means; for example, the stretch-treated present multilayer structure is heat-treated usually at a temperature of 80 to 180°C and preferably at a temperature of 100 to 165°C usually for about 2 to 600 seconds while the stretch-treated present multilayer structure is kept in a state of tension.

In the case of using the stretch-treated present multilayer structure as a shrink film, in order to impart heat shrinkability, the stretch-treated present multilayer structure is not subjected to the heat setting described above, but subjected to a treatment such as application of cool air to the present multilayer structure after the stretching treatment to cool-set the structure.

The thickness of the present multilayer structure (including a stretched multilayer structure), and the thicknesses of the present composition layer, the substrate resin layer, and the adhesive resin layer constituting the multilayer structure cannot be determined unconditionally because they depend on the layer configuration, the type of the substrate resin, the type of the adhesive resin, the application, the packaging form, the required physical properties, and the like, but the thickness of the present multilayer structure (including a stretched multilayer structure) is usually from 10 to 5000 $\mu$m, preferably from 30 to 3000 $\mu$m, particularly preferably from 50 to 2000 $\mu$m. The thickness of the present composition layer is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer to the substrate resin layer (the present composition layer/the substrate resin layer) in the present multilayer structure is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer to the adhesive resin layer (the present composition layer/the adhesive resin layer) in the present multilayer structure is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure. In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (2) or a packaging body such as a container or a lid member composed of the present multilayer structure, such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Third Aspect

The third aspect includes the following aspects [III-1] to [III-13].

[III-1]
A composition containing an EVOH resin, a titanium compound, and a metal compound (B) belonging to period 4 d-block of the long-form periodic table other than the titanium compound, wherein

at least a portion of the EVOH resin is derived from biomass,
a content of the titanium compound in terms of metal is 0.0001 ppm or more and less than 1 ppm relative to a mass of the composition, and
a mass ratio of a content of the metal compound (B) belonging to period 4 d-block of the long-form periodic table in terms of metal to the content of the titanium compound in terms of metal is from 2 to 45000.

[III-2]
The composition according to [III-1], wherein the content of the titanium compound in terms of metal is 0.0001 ppm or more and 0.8 ppm or less relative to the mass of the composition.
[III-3]
The composition according to [III-1] or [III-2], wherein the metal compound (B) belonging to period 4 d-block of the long-form periodic table is a zinc compound.
[III-4]
The composition according to any of [III-1] to [III-3], wherein the metal compound (B) belonging to period 4 d-block of the long-form periodic table is a carboxylate.
[III-5]
The composition according to any of [III-1] to [III-4], wherein the EVOH resin has a biobased content of from 0.01 to 99%.
[III-6]
The composition according to any of [III-1] to [III-5], wherein the EVOH resin has a biobased content of from 1 to 99%.
[III-7]
A molding material containing the composition described in any of [III-1] to [III-6].
[III-8]
A multilayer structure including a layer containing the composition described in any of [III-1] to [III-6].
[III-9]
The multilayer structure according to [III-8], further including an adhesive resin layer.
[III-10]
A molded body including the multilayer structure described in [III-8] or [III-9].
[III-11]
A food packaging body including the multilayer structure described in [III-8] or [III-9].
[III-12]
A method for producing the composition described in any of [III-1] to [III-6], the method including a step of mixing the EVOH resin and the titanium compound.
[III-13]
A method for producing the multilayer structure described in [III-8] or [III-9], the method including a step of melt-molding a layer containing the composition.

Hereinafter, the third aspect will be described based on embodiments for carrying out the third aspect. However, the present disclosure is not limited to the embodiments described below.

Composition

The composition according to the third aspect of the present disclosure (hereinafter may be referred to as "the present composition (3)") contains an EVOH resin as an essential component, and a specific trace amount of a titanium compound, wherein the titanium compound and the metal compound (B) belonging to period 4 d-block of the long-form periodic table other than the titanium compound are contained at a specific mass ratio.

That is, in the present composition (3), the content of the EVOH resin in the present composition (3) is usually 1 mass% or more, preferably 10 mass% or more, more preferably 50 mass% or more, still more preferably 60 mass% or more, particularly preferably 70 mass% or more, especially preferably 80 mass% or more, yet especially preferably 90 mass% or more, yet still more preferably 95 mass% or more. The upper limit value is 100 mass%, and may be 99 mass%, for example, from 1 to 100 mass% or from 10 to 99 mass%.

Hereinafter, the respective components will be described.

EVOH Resin

The EVOH resin used in the present embodiment is at least partially derived from biomass, and the same EVOH resin as the EVOH resin described in the first aspect can be used. The "present composition (1)" in the description of EVOH Resin of the first aspect is read as the "present composition (3)".

Titanium Compound

As the titanium compound used in the present embodiment, the same titanium compound as described in Titanium Compound of the first aspect can be used. The "present composition (1)" in the description of Titanium Compound of the first aspect is read as the "present composition (3)".

Metal Compound (B) Belonging to Period 4 d-Block of Long-Form Periodic Table Other Than Titanium Compound

Examples of the metal compound (excluding a titanium compound, the same applies hereinafter) belonging to period 4 d-block of the long-form periodic table (hereinafter, may be referred to as "specific period d-block") used in the present embodiment include a scandium compound, a vanadium compound, a chromium compound, a manganese compound, a cobalt compound, a copper compound, and a zinc compound. In particular, a zinc compound is preferable from the viewpoint that the effects of the disclosure are easily achieved.

Examples of the metal compound (B) belonging to the specific period d-block include salts, oxides, and hydroxides of metals belonging to the specific period d-block. Among them, metal oxides and metal salts belonging to the specific period d-block are preferable from the viewpoint of economic efficiency and dispersibility. In particular, a metal salt belonging to the specific period d-block is preferable from the viewpoint that the effects of the disclosure are easily achieved.

Examples of the metal salt belonging to the specific period d-block include inorganic salts such as carbonates, hydrogen carbonates, phosphates, borates, sulfates, and chlorides, and organic salts such as carboxylates. Among these, carboxylates are particularly preferable from the viewpoint that the effects of the disclosure are easily achieved.

As the carboxylate, a saturated carboxylate is usually used in view of commercial availability, but an unsaturated carboxylate may be used. Examples of the saturated carboxylate include monovalent carboxylates such as acetates, butyrates, propionates, enanthates, caprylates, caprates, laurates, palmitates, stearates, 12-hydroxystearates, behenates, and montanates, and divalent carboxylates such as oxalates, malonates, succinates, adipates, suberates, and sebacates. These may be used alone or in combination of two or more types thereof. Among these, in view of commercial availability, a linear carboxylate is preferable, a monovalent carboxylate is more preferable, a butyrate, a caproate, a caprylate, a caprate, a laurate, and a stearate are still more preferable, and a caproate, a caprylate, a caprate, and a laurate are particularly preferable.

In the carboxylate, the carboxylate anion usually has from 2 to 25 carbons, and in view of productivity, preferably from 2 to 22 carbons, more preferably from 4 to 20 carbons, still more preferably from 6 to 18 carbons.

From the above, the metal compound (B) belonging to the specific period d-block is preferably a zinc compound, more preferably a carboxylate of zinc, still more preferably a zinc carboxylate having an anion with from 2 to 25 carbons, particularly preferably a zinc carboxylate having an anion with from 2 to 22 carbons, especially preferably a zinc carboxylate having an anion with from 4 to 20 carbons, yet especially preferably a zinc carboxylate having an anion with from 6 to 18 carbons.

The molecular weight of the metal compound (B) belonging to the specific period d-block is usually from 100 to 10000, preferably from 150 to 1000, more preferably from 200 to 800 from the viewpoint of dispersibility and productivity in the composition (3).

From the viewpoint of economic efficiency and dispersibility, it is preferable that the metal compound (B) belonging to the specific period d-block used in the present embodiment excludes a layered inorganic compound such as montmorillonite and a double salt such as hydrotalcite.

As the form of the metal compound (B) belonging to the specific period d-block, for example, any form of property such as a solid form (powder, fine powder, flakes, and the like), a semi-solid form, a liquid form, a paste form, a solution form, or an emulsion form (aqueous dispersion) can be used. Among these, a powder form is preferable from the viewpoint of easy handling.

The metal compound (B) belonging to the specific period d-block can be used alone or in combination of two or more types thereof. When a plurality of metal compounds (B) belonging to the specific period d-block are used, the content thereof is the total content of the metal compounds (B) belonging to the specific period d-block in terms of metal mass.

The content of the metal compound (B) belonging to the specific period d-block in terms of metal mass is usually from 0.0001 to 1000 ppm, preferably from 0.01 to 980 ppm, more preferably from 0.05 to 940 ppm, still more preferably from 0.1 to 920 ppm, particularly preferably from 0.15 to 900 ppm, particularly preferably from 1 to 800 ppm, relative to the mass of the composition (3).

When the content of the metal compound (B) belonging to the specific period d-block is equal to or less than the upper limit value, excellent thermal stability tends to be achieved, whereas when the content is equal to or more than the lower limit value, more excellent effects of the present disclosure tend to be achieved.

The composition (3) as a reference of the content proportion of the metal compound (B) belonging to the specific period d-block is a composition (3) as a final product containing the EVOH resin, the metal compound (B) belonging to the specific period d-block, the titanium compound, various additives blended as necessary, and the like.

The content of the metal compound (B) belonging to the specific period d-block in the present composition (3) in terms of metal can be determined by, for example, adding pure water to a solution obtained by heating and ashing the composition (3) and subjecting the resulting mixture to an acid treatment with hydrochloric acid or the like to fix the volume, and measuring the resulting test liquid with an atomic absorption spectrophotometer. The content of the metal compound (B) belonging to the specific period d-block in terms of metal is the content of the metal element belonging to the specific period d-block.

The mass ratio of the content of the metal compound (B) belonging to the specific period d-block in terms of metal to the content of the titanium compound in terms of metal is preferably from 2 to 45000, more preferably from 2.2 to 40000, still more preferably from 2.5 to 30000, particularly preferably from 10 to 25000, especially preferably from 1000 to 20000.

When the mass ratio is equal to or less than the upper limit value, there is a tendency that coloring is easily suppressed, whereas when the mass ratio is equal to or more than the lower limit value, an effect of suppressing thermal degradation tends to be achieved.

Here, it is generally known that the EVOH resin is deteriorated by heat. The reason for this is considered as follows. The EVOH resin is deteriorated by heat to generate radicals, and the radicals cause a dehydration reaction of the hydroxyl groups of the EVOH resin, thereby forming a double bond structure in the main chain of the EVOH resin. Then, this site serves as a reaction starting point to cause dehydration reaction or the like, thereby forming a polyene structure in the main chain of the EVOH resin.

In contrast, the present composition (3) contains a specific trace amount of a titanium compound, and thus, the change in coloring due to thermal degradation of the EVOH resin is suppressed, and excellent long-run properties are achieved.

Then, usually, it is considered that when a titanium compound is contained in the composition (3), the composition (3) is colored by titanium ions, and thus, it is common technical knowledge for those skilled in the art to avoid the use of a titanium compound.

However, in the present embodiment, it has been found that, contrary to such common technical knowledge, the composition (3) having excellent thermal stability can be obtained by using a specific trace amount of a titanium compound and using the metal compound (B) belonging to the specific period d-block and the titanium compound at a specific mass ratio.

Titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed. It is presumed that when the metal compound (B) belonging to the specific period d-block coexists with the titanium compound, the stabilizing action by the titanium compound is more effectively exhibited.

Meanwhile, it is considered that when the content of the titanium compound is within the specific range, the deterioration of the EVOH resin due to thermal decomposition caused by the titanium compound tends to be suppressed.

Additional Thermoplastic Resin

The present composition (3) can contain a thermoplastic resin other than the EVOH resin within a range such that the effects of the present disclosure are not impaired (for example, usually 50 mass% or less, preferably 30 mass% or less, more preferably 20 mass% or less, particularly preferably 10 mass% or less of the present composition (3). The lower limit value is 0 mass%, for example, from 0 to 50 mass%). As the additional thermoplastic resin, the same one as Additional Thermoplastic Resin described in the first aspect can be used.

Additional Compounding Agent

The present composition (3) may contain a compounding agent (the compounding agent as used herein is used in the sense of excluding the titanium compound and the metal compound (B) belonging to the specific period d-block) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogen-containing resins and transition metals (e.g., a combination of polypropylene and cobalt), blends of carbon-carbon unsaturated bond-containing resins and transition metals (e.g., a combination of polybutadiene and cobalt), photo-oxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, anti-blocking agents, and filling agents (e.g., aluminum and inorganic fillers). One of these compounds may be used alone or two or more types thereof may be used in combination.

Method for Producing Composition

The present composition (3) can be produced by, for example, mixing the EVOH resin, the titanium compound, and the metal compound (B) belonging to the specific period d-block by a known method, for example, a dry blending method, a melt mixing method, a solution mixing method, an impregnation method, or the like, and among these, it is preferable to produce the present composition (3) by a method including a step of mixing the EVOH resin and the titanium compound. Furthermore, these production methods can be optionally combined.

Examples of the dry blending method include (i) a method of dry-blending a pellet-shaped EVOH resin and a titanium compound and/or the metal compound (B) belonging to the specific period d-block using a tumbler or the like.

Examples of the melt mixing method include (ii) a method of melt-kneading a dry blend obtained by dry-blending a pellet-shaped EVOH resin and a titanium compound and/or the metal compound (B) belonging to the specific period d-block, and (iii) a method of melt-kneading a titanium compound and/or the metal compound (B) belonging to the specific period d-block added to a molten EVOH resin.

Examples of the solution mixing method include (iv) a method of preparing a solution using a commercially available EVOH resin, blending a titanium compound and/or the metal compound (B) belonging to the specific period d-block therein, performing solidification molding, then performing solid-liquid separation with a known means, and drying the obtained product; and (v) a method of, in the process of producing an EVOH resin, incorporating a titanium compound and/or the metal compound (B) belonging to the specific period d-block in an ethylene-vinyl ester copolymer solution or a uniform solution of the EVOH resin (water-alcohol solution or the like) before saponification, performing solidification molding, then performing solid-liquid separation with a known means, and drying the obtained product.

Examples of the impregnation method include (vi) a method of bringing a pellet-shaped EVOH resin into contact with an aqueous solution containing a titanium compound and/or the metal compound (B) belonging to the specific period d-block, incorporating the titanium compound and/or the metal compound (B) belonging to the specific period d-block in the EVOH resin, and then drying the EVOH resin.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present embodiment, the above different methods can be combined. Among those, a melt-mixing method is preferable, and the method (ii) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition (3) produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (3) is not particularly limited, but is usually from 0.01 to 0.5 mass%, preferably from 0.05 to 0.35 mass%, particularly preferably from 0.1 to 0.3 mass%.

The water content of the present composition (3) is measured and calculated by the following method.

The mass ($W_1$) of the present composition (3) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (3) is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition (3). The lower limit is usually 0 mass%, for example, from 0 to 5 mass%.

The present composition (3) thus produced is excellent in thermal stability, and the ratio ("1347" + "1348 + "1349")/("1381" + "1382") of the sum of the color number "1347" (R: 88, G: 72, B: 56), the color number "1348" (R: 88, G: 72, B: 72), and the color number "1349" (R: 88, G: 72, B: 88) to the sum of the color number "1381" (R: 88, G: 104, B: 88) and the color number "1382" (R: 88, G: 104, B: 104) measured using a visual analyzer IRIS VA400 (available from Alpha mos) of the present composition (3) is usually 4 or less, preferably 3 or less, more preferably 2 or less. The lower limit value is usually 0, for example, usually from 0 to 4.

As the ratio is smaller, coloring associated with thermal degradation is suppressed, and thermal stability tends to be higher.

The difference of 1 in the ratio appears as a large difference in yield in actual production, and thus the difference is very large.

Molding Material

The present composition (3) thus produced is prepared into various forms such as a pellet, a powder form, or a liquid form, and is provided as a molding material for various molded products. In particular, in the present embodiment, in a case where the composition is provided as a material for use in melt molding, the effects of the present disclosure tend to be more efficiently achieved, which is preferable.

Examples of the molded product include a single layer film molded from the present composition (3), and a multilayer structure having a layer composed of the present composition (3).

Multilayer Structure

A multilayer structure according to the third aspect of the present disclosure (hereinafter, referred to as "present multilayer structure (3)") contains the present composition (3) and includes at least one layer composed of the present composition (3). The layer composed of the present composition (3) in the present multilayer structure (3) (hereinafter, simply referred to as "present composition layer (3)") may be a single layer or a plurality of layers. When the present composition layer (3) is laminated with an additional substrate containing a thermoplastic resin other than the EVOH resin as a main component (hereinafter, the resin used for the substrate may be abbreviated as "substrate resin"), it is possible to further impart strength, protect the present composition layer (3) from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer (3) is denoted by a (a1, a2, ...), and the substrate resin layer is denoted by b (b1, b2, ...), the layer configuration of the present multilayer structure (3) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition (3) and a thermoplastic resin other than the EVOH resin, which is produced by remelt-molding an end, a defective product, or the like generated in the process of producing the present multilayer structure (3), is denoted by R, the layer configuration can also be b/R/a, b/R/a/b, b/R/a/R/b, b/a/R/a/b, b/R/a/R/a/R/b, or the like. The number of layers of the present multilayer structure (3) is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure (3), when an adhesive resin layer is used between the present composition layer (3) and the substrate resin layer, the adhesive resin layer is positioned on both sides of the present composition layer (3), and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer (3) and the substrate resin layer (including a case of interposing an adhesive resin layer therebetween) can be performed by a known method. Examples thereof include a method of melt-extrusion-laminating the substrate resin to a film, a sheet, or the like of the present composition (3), a method of melt-extrusion-laminating the present composition (3) to the substrate resin layer, a method of co-extruding the present composition (3) and the substrate resin, a method of dry-laminating the present composition (3) (the present composition layer (3)) and the substrate resin (substrate resin layer) using a known adhesive such as an organic titanium compound, an isocyanate compound, a polyester-based compound, or a polyurethane compound, and a method of applying a solution of the present composition (3) onto the substrate resin and then removing the solvent. Among these, production is preferably performed by a method including a step of melt molding a layer containing the present composition layer (3), and specifically by a co-extrusion method, from the viewpoints of cost and the environment.

The present multilayer structure (3) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure (3) and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure (3) after the stretching treatment may be subjected to heat setting for the purpose of imparting dimensional stability. The heat setting can be performed by a well-known means; for example, the stretch-treated present multilayer structure (3) is heat-treated usually at a temperature of 80 to 180°C and preferably at a temperature of 100 to 165°C usually for about 2 to 600 seconds while the stretch-treated present multilayer structure is kept in a state of tension.

In the case of using the stretch-treated present multilayer structure (3) as a shrink film, in order to impart heat shrinkability, the stretch-treated present multilayer structure is not subjected to the heat setting described above, but subjected to a treatment such as application of cool air to the present multilayer structure (3) after the stretching treatment to cool-set the structure.

The thickness of the present multilayer structure (3) (including a stretched multilayer structure), and the thicknesses of the present composition layer (3), the substrate resin layer, and the adhesive resin layer constituting the multilayer structure (3) cannot be determined unconditionally because they depend on the layer configuration, the type of the substrate resin, the type of the adhesive resin, the application, the packaging form, the required physical properties, and the like, but the thickness of the present multilayer structure (3) (including a stretched multilayer structure) is usually from 10 to 5000 $\mu$m, preferably from 30 to 3000 $\mu$m, particularly preferably from 50 to 2000 $\mu$m. The thickness of the present composition layer (3) is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer (3) to the substrate resin layer (the present composition layer (3)/the substrate resin layer) in the present multilayer structure (3) is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer (3) to the adhesive resin layer (the present composition layer (3)/the adhesive resin layer) in the present multilayer structure (3) is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure (3). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (3) or a packaging body such as a container or a lid member composed of the present multilayer structure (3), such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Fourth Aspect

The present disclosure includes the following aspects [IV-1] to [IV-11].

[IV-1]
A composition containing an EVOH resin, a titanium compound, and a lubricant (C), wherein

at least a portion of the EVOH resin is derived from biomass,
a content of the titanium compound in terms of metal is 0.0001 ppm or more and less than 1 ppm relative to a mass of the composition, and
a mass ratio of a content of the lubricant (C) to the content of the titanium compound in terms of metal is from 500 to 280000.

[IV-2]
The composition according to [IV-1], wherein the content of the titanium compound in terms of metal is 0.0001 ppm or more and 0.8 ppm or less relative to the mass of the composition.
[IV-3]
The composition according to [IV-1] or [IV-2], wherein the EVOH resin has a biobased content of from 0.01 to 99%.
[IV-4]
The composition according to any of [IV-1] to [IV-3], wherein the EVOH resin has a biobased content of from 1 to 99%.
[IV-5]
A molding material containing the composition described in any of [IV-1] to [IV-4].
[IV-6]
A multilayer structure including a layer containing the composition described in any of [IV-1] to [IV-4].
[IV-7]
The multilayer structure according to [IV-6], further including an adhesive resin layer.
[IV-8]
A molded body including the multilayer structure described in [IV-6] or [IV-7].
[IV-9]
A food packaging body including the multilayer structure described in [IV-6] or [IV-7].
[IV-10]
A method for producing the composition described in any of [IV-1] to [IV-4], the method including a step of mixing the EVOH resin and the titanium compound.
[IV-11]
A method for producing the multilayer structure described in [IV-6] or [IV-7], the method including a step of melt-molding a layer containing the composition.

Hereinafter, the fourth aspect will be described based on embodiments for carrying out the fourth aspect. However, the present disclosure is not limited to the embodiments described below.

Composition

The composition according to the fourth aspect of the present disclosure (hereinafter may be referred to as "the present composition (4)") contains an EVOH resin as an essential component, and a specific trace amount of a titanium compound, wherein the lubricant (C) and the titanium compound are contained at a specific mass ratio.
That is, in the present composition (4), the content of the EVOH resin in the present composition (4) is usually 1 mass% or more, preferably 10 mass% or more, more preferably 50 mass% or more, still more preferably 60 mass% or more, particularly preferably 70 mass% or more, especially preferably 80 mass% or more, yet especially preferably 90 mass% or more, yet still more preferably 95 mass% or more. The upper limit value is 100 mass%, and may be 99 mass%, for example, from 1 to 100 mass% or from 10 to 99 mass%.

Hereinafter, the respective components will be described.

EVOH Resin

The EVOH resin used in the present embodiment is at least partially derived from biomass, and the same EVOH resin as the EVOH resin described in the first aspect can be used. The "present composition (1)" in the description of EVOH Resin of the first aspect is read as the "present composition (4)".

Titanium Compound

As the titanium compound used in the present embodiment, the same titanium compound as described in Titanium Compound of the first aspect can be used. The "present composition (1)" in the description of Titanium Compound of the first aspect is read as the "present composition (4)".

Lubricant (C)

Examples of the lubricant (C) include higher fatty acids having from 12 to 25 carbons, preferably higher fatty acids having from 13 to 23 carbons, more preferably higher fatty acids having from 15 to 20 carbons.

Examples of the higher fatty acids include higher fatty acids such as lauric acid, myristic acid, palmitic acid, stearic acid, behenic acid, and oleic acid, metal salts of higher fatty acids, such as aluminum salts, calcium salts, zinc salts, magnesium salts, and barium salts of these higher fatty acids; esters of higher fatty acids, such as methyl esters, isopropyl esters, butyl esters, and octyl esters of the higher fatty acids; saturated higher fatty acid amides such as stearic acid amide and behenic acid amide, and unsaturated higher fatty acid amides such as oleic acid amide and erucic acid amide; and amides of higher fatty acids, for example, bis higher fatty acid amides such as ethylene bisstearic acid amide, ethylene bis-oleic acid amide, ethylene bis-erucic acid amide, and ethylene bis-lauric acid amide.

Examples of the lubricant (C) other than the higher fatty acids include low-molecular-weight polyolefins having a molecular weight of about from 500 to 10000 (preferably less than 10000, more preferably 9000 or less), such as low-molecular-weight polyethylene, low-molecular-weight polypropylene, or acid-modified products thereof, higher alcohols, ester oligomers, and fluoroethylene resins.

These lubricants (C) can be used alone or in combination of two or more types thereof.

The valence of the higher fatty acid is usually from 1 to 5, preferably from 1 to 3, more preferably from 1 to 2, from the viewpoint of extrusion stability and market availability. The valence means the number of structures derived from a higher fatty acid contained in one molecule of a compound used as the lubricant (C). For example, when bisstearic acid amide is used as the lubricant (C), the bisstearic acid amide has two structures derived from a higher fatty acid molecule having 18 carbons in one molecule, and thus, the bisstearic acid amide is an amide of a higher fatty acid having 18 carbons, and the valence of the higher fatty acid is defined as two.

Among the lubricants (C), higher fatty acids, metal salts of higher fatty acids, esters of higher fatty acids, and amides of higher fatty acids are preferable, metal salts of higher fatty acids and amides of higher fatty acids are more preferable, amides of higher fatty acids are still more preferable from the viewpoint of extrusion stability, and ethylenebisstearic acid amide is particularly preferable.

As the form of the lubricant (C), for example, any form of property such as a solid form (powder, fine powder, flakes, and the like), a semi-solid form, a liquid form, a paste form, a solution form, or an emulsion form (aqueous dispersion) can be used. Among these, a powder form is preferable. The particle size of the powdery lubricant (C) is usually from 0.1 to 100 $\mu$m, preferably from 1 to 75 $\mu$m, more preferably from 5 to 50 $\mu$m.

The content of the lubricant (C) is preferably 10000 ppm or less, more preferably 9500 ppm or less, still more preferably 9000 ppm or less, particularly preferably 8500 ppm or less, most preferably 100 ppm or less, relative to the mass of the present composition (4). When the content of the lubricant (C) is equal to or less than the upper limit value, excellent thermal stability tends to be achieved. The lower limit of the content of the lubricant (C) is usually 1 ppm, preferably 10 ppm or more, more preferably 30 ppm or more, still more preferably 50 ppm or more, and the range is usually, for example, from 1 to 10000 ppm. When the content of the lubricant (C) is equal to or more than the lower limit value, excellent moldability of the composition (4) tends to be achieved.

The content of the lubricant (C) can be measured by, for example, the following method.

When the lubricant (C) is attached to the surface of the EVOH resin, the amount of the lubricant (C) added can be regarded as the content.

When the lubricant (C) is contained in the present composition (4), and the lubricant (C) is, for example, a higher fatty acid amide, the content of the lubricant (C) in the present composition (4) can be determined by measuring the total nitrogen amount in the present composition (4) using a trace amount total nitrogen analyzer and converting the total nitrogen amount into the content of the lubricant (C).

The mass ratio of the content of the lubricant (C) to the content of the titanium compound in terms of metal [the content of lubricant (C)/the content of titanium compound in terms of metal] is usually from 500 to 280000, preferably from 600 to 250000, more preferably from 800 to 230000, particularly preferably from 1000 to 200000. When the mass ratio is equal to or less than the upper limit value, there is a tendency that coloring is easily suppressed, whereas when the mass ratio is equal to or more than the lower limit value, an effect of suppressing thermal degradation tends to be achieved.

Here, it is generally known that coloring occurs in the EVOH resin due to thermal degradation. The reason for this is considered as follows. The EVOH resin is deteriorated by heat to generate radicals, and the radicals cause a dehydration reaction of the hydroxyl groups of the EVOH resin, thereby forming a double bond structure in the main chain of the EVOH resin. Then, this site serves as a reaction starting point to cause dehydration reaction or the like, thereby forming a polyene structure in the main chain of the EVOH resin.

In contrast, the present composition (4) contains a specific trace amount of a titanium compound, and thus, the change in coloring due to thermal degradation of the EVOH resin is suppressed, and excellent long-run properties are obtained.

Usually, it is considered that when a titanium compound is contained in the composition (4), the composition (4) is colored by titanium ions, and thus, it is common technical knowledge for those skilled in the art to avoid the use of a titanium compound.

However, in the present embodiment, contrary to such common technical knowledge, it has been found that the composition (4) in which the change in coloring due to thermal degradation is suppressed is produced when a specific trace amount of a titanium compound and the lubricant (C) are contained, and these two are used at a specific mass ratio.

Titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed.

It is presumed that when the lubricant (C) coexists with the titanium compound, the reaction occurring between the lubricant (C) and the composition (4) is also suppressed, the thickening tendency is suppressed, and the thermal stability is improved.

Meanwhile, it is considered that when the content of the titanium compound is within the specific range, the deterioration of the EVOH resin due to thermal decomposition caused by the titanium compound tends to be suppressed.

Additional Thermoplastic Resin

The present composition (4) can contain a thermoplastic resin other than the EVOH resin within a range such that the effects of the present disclosure are not impaired (for example, usually 50 mass% or less, preferably 30 mass% or less, more preferably 20 mass% or less, particularly preferably 10 mass% or less of the present composition (4). The lower limit value is 0 mass%, for example, from 0 to 50 mass%). As the additional thermoplastic resin, the same one as Additional Thermoplastic Resin described in the first aspect can be used.

Additional Compounding Agent

The present composition (4) may contain a compounding agent (the compounding agent as used herein is used in the sense of excluding the titanium compound and the lubricant (C)) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol, and excluding one used as the lubricant (C)), oxygen absorbers [e.g., inorganic oxygen absorbers such as aluminum powder and potassium sulfite; ascorbic acid, fatty acid esters and metal salts thereof (excluding one used as the lubricant (C)), gallic acid, polyhydric phenols such as hydroxyl group-containing phenolaldehyde resins, terpene compounds, blends of tertiary hydrogen-containing resins and transition metals (e.g., a combination of polypropylene and cobalt), blends of carbon-carbon unsaturated bond-containing resins and transition metals (e.g., a combination of polybutadiene and cobalt), photo-oxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding one used as the lubricant (C)), antibacterial agents, anti-blocking agents, and filling agents (e.g., aluminum and inorganic fillers). One of these compounds may be used alone or two or more types thereof may be used in combination.

Method for Producing Composition

The present composition (4) can be produced by, for example, mixing the EVOH resin, the titanium compound, and the lubricant (C) by a known method, for example, a dry blending method, a melt mixing method, a solution mixing method, an impregnation method, or the like, and among these, it is preferable to produce the present composition (4) by a method including a step of mixing the EVOH resin and the titanium compound. Furthermore, these production methods can be optionally combined.

Examples of the dry blending method include (i) a method of dry-blending a pellet-shaped EVOH resin and a titanium compound and/or the lubricant (C) using a tumbler or the like.

Examples of the melt mixing method include (ii) a method of melt-kneading a dry blend obtained by dry-blending a pellet-shaped EVOH resin and a titanium compound and/or the lubricant (C), and (iii) a method of melt-kneading a titanium compound and/or the lubricant (C) added to a molten EVOH resin.

Examples of the solution mixing method include (iv) a method of preparing a solution using a commercially available EVOH resin, blending a titanium compound and/or the lubricant (C) therein, performing solidification molding, then performing solid-liquid separation with a known means, and drying the obtained product; and (v) a method of, in the process of producing an EVOH resin, incorporating a titanium compound and/or the lubricant (C) in an ethylene-vinyl ester copolymer solution before saponification or a uniform solution of the EVOH resin (water-alcohol solution or the like), performing solidification molding, then performing solid-liquid separation with a known means, and drying the obtained product.

Examples of the impregnation method include (vi) a method of bringing a pellet-shaped EVOH resin into contact with an aqueous solution containing a titanium compound and/or the lubricant (C), incorporating the titanium compound and/or the lubricant (C) in the EVOH resin, and then drying the EVOH resin.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present embodiment, the above different methods can be combined. Among those, a melt-mixing method is preferable, and the method (ii) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition (4) produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (4) is not particularly limited, but is usually from 0.01 to 0.5 mass%, preferably from 0.05 to 0.35 mass%, particularly preferably from 0.1 to 0.3 mass%.

The water content of the present composition (4) is measured and calculated by the following method.

The mass ($W_1$) of the present composition (4) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (4) is in the form of pellets, preferably, a known lubricant (C) is adhered to the surface of the pellets from the viewpoint of stabilizing the feed properties during melt molding. Examples of the type of lubricant (C) include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately from 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant (C) is usually 5 mass% or less and preferably 1 mass% or less of the present composition (4). The lower limit is usually 0 mass%, for example, from 0 to 5 mass%.

The present composition (4) thus produced is excellent in thermal stability, and the ratio ("1363" + "1364" + "1365")/("1636" + "1637" + "1638") of the sum of the color number "1363" (R: 88, G: 88, B: 56), the color number "1364" (R: 88, G: 88, B: 72), and the color number "1365" (R: 88, G: 88, B: 88) to the sum of the color number "1636" (R: 104, G: 104, B: 72), the color number "1637" (R: 104, G: 104, B: 88), and the color number "1638" (R: 104, G: 104, B: 104) measured using a visual analyzer IRIS VA400 (available from Alpha mos) of the present composition (4) is usually 1.8 or less, preferably 1.4 or less, more preferably 1 or less. The lower limit value is usually 0, for example, usually from 0 to 1.8.

As the ratio is smaller, coloring associated with thermal degradation is suppressed, and thermal stability tends to be higher.

The difference of 0.05 in the ratio appears as a large difference in yield in actual production, and thus the difference is very large.

Molding Material

The present composition (4) thus produced is prepared into various forms such as a pellet, a powder form, or a liquid form, and is provided as a molding material for various molded products. In particular, in the present embodiment, in a case where the composition is provided as a material for use in melt molding, the effects of the present disclosure tend to be more efficiently achieved, which is preferable.

Examples of the molded product include a single layer film molded from the present composition (4), and a multilayer structure having a layer composed of the present composition (4).

Multilayer Structure

A multilayer structure according to the fourth aspect of the present disclosure (hereinafter, referred to as "present multilayer structure (4)") contains the present composition (4) and includes at least one layer composed of the present composition (4). The layer composed of the present composition (4) in the present multilayer structure (4) (hereinafter, simply referred to as "present composition layer (4)") may be a single layer or a plurality of layers. When the present composition layer (4) is laminated with an additional substrate containing a thermoplastic resin other than the EVOH resin as a main component (hereinafter, the resin used for the substrate may be abbreviated as "substrate resin"), it is possible to further impart strength, protect the present composition layer (4) from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer (4) is denoted by a (a1, a2, ...), and the substrate resin layer is denoted by b (b1, b2, ...), the layer configuration of the present multilayer structure (4) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition (4) and a thermoplastic resin other than the EVOH resin, which is produced by remelt-molding an end, a defective product, or the like generated in the process of producing the present multilayer structure (4), is denoted by R, the layer configuration can also be b/R/a, b/R/a/b, b/R/a/R/b, b/a/R/a/b, b/R/a/R/a/R/b, or the like. The number of layers of the present multilayer structure (4) is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure (4), when an adhesive resin layer is used between the present composition layer (4) and the substrate resin layer, the adhesive resin layer is positioned on both sides of the present composition layer (4), and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer (4) and the substrate resin layer (including a case of interposing an adhesive resin layer therebetween) can be performed by a known method. Examples thereof include a method of melt-extrusion-laminating the substrate resin to a film, a sheet, or the like of the present composition (4), a method of melt-extrusion-laminating the present composition (4) to the substrate resin layer, a method of coextruding the present composition (4) and the substrate resin, a method of dry-laminating the present composition (4) (the composition layer (4)) and the substrate resin (substrate resin layer) using a known adhesive such as an organic titanium compound, an isocyanate compound, a polyester-based compound, or a polyurethane compound, and a method of applying a solution of the present composition (4) onto the substrate resin and then removing the solvent. Among these, production is preferably performed by a method including a step of melt molding a layer containing the present composition layer (4), and specifically by a co-extrusion method, from the viewpoints of cost and the environment.

The present multilayer structure (4) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure (4) and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure (4) after the stretching treatment may be subjected to heat setting for the purpose of imparting dimensional stability. The heat setting can be performed by a well-known means; for example, the stretch-treated present multilayer structure (4) is heat-treated usually at a temperature of from 80 to 180°C and preferably at a temperature of from 100 to 165°C usually for about from 2 to 600 seconds while the stretch-treated present multilayer structure is kept in a state of tension.

In the case of using the stretch-treated present multilayer structure (4) as a shrink film, in order to impart heat shrinkability, the stretch-treated present multilayer structure is not subjected to the heat setting described above, but subjected to a treatment such as application of cool air to the present multilayer structure (4) after the stretching treatment to cool-set the structure.

The thickness of the present multilayer structure (4) (including a stretched multilayer structure), and the thicknesses of the present composition layer (4), the substrate resin layer, and the adhesive resin layer constituting the multilayer structure (4) cannot be determined unconditionally because they depend on the layer configuration, the type of the substrate resin, the type of the adhesive resin, the application, the packaging form, the required physical properties, and the like, but the thickness of the present multilayer structure (4) (including a stretched multilayer structure) is usually from 10 to 5000 $\mu$m, preferably from 30 to 3000 $\mu$m, particularly preferably from 50 to 2000 $\mu$m. The thickness of the present composition layer (4) is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer (4) to the substrate resin layer (the present composition layer (4)/the substrate resin layer) in the present multilayer structure (4) is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer (4) to the adhesive resin layer (the present composition layer (4)/the adhesive resin layer) in the present multilayer structure (4) is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure (4). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (4) or a packaging body such as a container or a lid member composed of the present multilayer structure (4), such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Fifth Aspect

The fifth aspect includes the following aspects [V-1] to [V-13].

[V-1]
A composition containing an EVOH resin, a titanium compound, and a polyamide resin (D), wherein

at least a portion of the EVOH resin is derived from biomass, and
a content of the titanium compound in terms of metal is 0.0001 ppm or more and less than 1 ppm relative to a mass of the composition.

[V-2]
The composition according to [V-1], wherein the content of the titanium compound in terms of metal is 0.0001 ppm or more and 0.8 ppm or less relative to the mass of the composition.
[V-3]
The composition according to [V-1] or [V-2], wherein a content of the polyamide resin (D) is from 1 to 40 mass% relative to the entirety of the composition.

[V-4]

The composition according to any of [V-1] to [V-3], wherein a mass content ratio of the EVOH resin to the polyamide resin (D) [EVOH resin/(D)] is from 1/99 to 99/1.

[V-5]

The composition according to any of [V-1] to [V-4], wherein the EVOH resin has a biobased content of from 0.01 to 99%.

[V-6]

The composition according to any of [V-1] to [V-5], wherein the EVOH resin has a biobased content of from 1 to 99%.

[V-7]

A molding material containing the composition described in any of [V-1] to [V-6].

[V-8]

A multilayer structure including a layer containing the composition described in any of [V-1] to [V-6].

[V-9]

The multilayer structure according to [V-8], further including an adhesive resin layer.

[V-10]

A molded body including the multilayer structure described in [V-8] or [V-9].

[V-11]

A food packaging body including the multilayer structure described in [V-8] or [V-9].

[V-12]

A method for producing the composition described in any of [V-1] to [V-6], the method including a step of mixing the EVOH resin and the titanium compound.

[V-13]

A method for producing the multilayer structure described in [V-8] or [V-9], the method including a step of melt-molding a layer containing the composition.

Hereinafter, the fifth aspect will be described based on embodiments for carrying out the fifth aspect. However, the present disclosure is not limited to the embodiments described below.

Composition

The composition according to the fifth aspect of the present disclosure (hereinafter may be referred to as "the present composition (5)") contains an EVOH resin as an essential component and contains a specific trace amount of a titanium compound and a polyamide resin (D).

Hereinafter, the respective components will be described.

EVOH Resin

The EVOH resin used in the present embodiment is at least partially derived from biomass, and the same EVOH resin as described in EVOH Resin in the first aspect can be used. The "present composition (1)" in the description of EVOH Resin of the first aspect is read as the "present composition (5)".

The content of the EVOH resin in the present composition is usually 1 mass% or more, preferably 10 mass% or more, more preferably 50 mass% or more, still more preferably 60 mass% or more, particularly preferably 70 mass% or more, especially preferably 75 mass% or more, yet especially preferably 80 mass% or more. The upper limit of the content of the EVOH resin is usually 99 mass% or less, preferably 95 mass% or less, more preferably 93 mass% or less. When such a value is within the range described above, the effects of the present disclosure tend to be more effectively achieved.

Titanium Compound

As the titanium compound used in the present embodiment, the same titanium compound as described in Titanium Compound of the first aspect can be used. The "present composition (1)" in the description of Titanium Compound of the first aspect is read as the "present composition (5)".

Polyamide Resin (D)

The polyamide resin (D) used in the present embodiment is a water-insoluble thermoplastic resin, and a known general resin can be used.

Examples of the polyamide resin (D) include homopolymers such as polycapramide (nylon 6), poly-ω-aminoheptanoic acid (nylon 7), poly-ω-aminononanoic acid (nylon 9), polyundecanamide (nylon 11), and polylauryl lactam (nylon 12). Examples of the copolyamide resins include aliphatic polyamides such as polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polyoctamethylene adipamide (nylon 86), polydecamethylene adipamide (nylon 106), caprolactam/lauryllactam copolymer (nylon 6/12), caprolactam/ω-aminononanoic acid copolymer (nylon 6/9), caprolactam/hexamethylenediammonium adipate copolymer (nylon 6/66), lauryllactam/hexamethylenediammonium adipate copolymer (nylon 12/66), ethylenediamine adipamide/hexamethylenediammonium adipate copolymer (nylon 26/66), caprolactam/hexamethylenediammonium adipate/hexamethylenediammonium sebacate copolymer (nylon 66/610), and ethyleneammonium adipate/hexamethylenediammonium adipate/hexamethylenediammonium sebacate copolymers (nylon 6/66/610); aromatic polyamides such as polyhexamethylene isophthalamide, polyhexamethylene terephthalamide, polymetaxylylene adipamide, hexamethylene isophthalamide/terephthalamide copolymer, poly-p-phenylene terephthalamide, and poly-p-phenylene-3,4'-diphenyl ether terephthalamide; amorphous polyamides; polyamide resins of these modified with aromatic amines such as methylenebenzylamine and metaxylenediamine; metaxylylenediammonium adipate; and terminal-modified polyamide resins of these. Among these, a terminal-modified polyamide resin is preferable. One type of these polyamide resins (D) may be used alone or two or more types thereof may be used in combination.

The polyamide resin (D) tends to have a high bonding strength with a resin containing a polar group such as an EVOH resin. Thus, the resin composition (5) containing an EVOH resin and the polyamide resin (D) is preferably used for improving the moisture resistance of a multilayer structure in which a layer composed of the resin composition (5) and a layer composed of another thermoplastic resin are laminated.

The proportion of the amide bond in the amide monomer unit constituting the polyamide resin (D) is preferably from 20 to 60%, more preferably from 30 to 50%, particularly preferably from 35 to 45%, when the amide monomer unit (for example, in the case of nylon 6, the amide bond (-CONH-) in $[-C_6H_5-CONH-]$) is calculated as a proportion of the molecular weight. When the proportion of the amide bond is equal to or more than the lower limit value, excellent bonding strength at the interface with the polar resin such as the EVOH resin tends to be achieved, whereas when the proportion is equal to or less than the upper limit value, the occurrence of poor appearance due to the roughness of the adhesive interface tends to be suppressed when the resin composition is coextruded because of the appropriate reactivity with the polar resin such as the EVOH resin during melt molding.

The melting point of the polyamide resin (D) is preferably from 160 to 270°C, more preferably from 175 to 250°C, still more preferably from 190 to 230°C. When the melting point of the polyamide resin (D) is equal to or higher than the lower limit value, the multilayer structure tends to have excellent heat resistance. Meanwhile, when the melting point of the polyamide resin (D) is equal to or lower than the upper limit value, in the case of a multilayer structure including another resin layer, the difference in melting point from the resin used in another layer becomes small. This tends to suppress deterioration in appearance of a multilayer structure due to layer disorder at the time of merging in coextrusion molding with another resin. Further, in the case of coextrusion molding with the EVOH resin, the thermal degradation of the EVOH resin caused by the die temperature tends to be suppressed.

From the above viewpoint, as the preferable polyamide resin (D), the melting point is usually from 160 to 270°C, preferably from 175 to 250°C, more preferably from 190 to 230°C. The proportion of amide bonds is usually from 20 to 60%, preferably from 30 to 50%, more preferably from 35 to 45%. Specifically, for example, nylon 6 (melting point: about 225°C, amide bond proportion: 38%) and nylon 6/66 (melting point: about 195°C, amide bond proportion: 38%) are preferable.

The polymerization degree of the polyamide resin (D) can be generally represented by a relative viscosity, and is usually preferably from 1.5 to 6.0, more preferably from 2.0 to 6.0, still more preferably from 2.5 to 5.0. This is because when the relative viscosity is equal to or less than the upper limit value, there is a tendency that the extruder is prevented from being in a high torque state during molding and extrusion processing is facilitated, whereas when the relative viscosity is equal to or more than the lower limit value, excellent thickness accuracy of the resulting film or sheet tends to be achieved. The relative viscosity can be measured according to JIS K 6933 by completely dissolving 1 g of the polyamide resin in 100 mL of 96 mass% concentrated sulfuric acid and using a capillary viscometer at 25°C.

The content of the polyamide resin (D) is usually from 1 to 40 mass%, preferably from 5 to 35 mass%, more preferably from 15 to 30 mass% relative to the entire composition (5). When such a content proportion is equal to or less than the upper limit value, there is a tendency that coloring is easily suppressed, whereas when the content proportion is equal to or more than the lower limit value, an effect of suppressing thermal degradation tends to be achieved.

In the present composition (5), the mass content ratio of the EVOH resin to the polyamide resin (D) [EVOH resin/(D)] is usually preferably from 1/99 to 99/1, more preferably from 10/90 to 99/1, still more preferably from 50/50 to 98/2, yet still more preferably from 60/40 to 95/5, particularly preferably from 70/30 to 95/5, especially preferably from 75/25 to 95/5. When the mass content ratio of the polyamide resin (D) is equal to or more than the lower limit value, the blending effect (for example, heat resistant water sterilization treatment performance) of the polyamide resin (D) tends to be maintained in the resulting molded body, whereas when the mass content ratio of the polyamide resin (D) is equal to or less than the upper limit value, excellent gas barrier properties tend to be achieved.

The total content of the EVOH resin and the polyamide resin (D) in the present composition (5) is usually 70 mass% or more, preferably 80 mass% or more, more preferably 90 mass% or more. The upper limit of the total content of the EVOH resin and the polyamide resin (D) is the total mass of the resin composition (5) excluding the content of the titanium compound.

Here, it is generally known that the EVOH resin is deteriorated by heat, and it is known that when a polyamide resin is blended in the EVOH resin, the EVOH resin is more likely to be thermally deteriorated and exhibits a thickening tendency at the time of heating. Although the mechanism is not clear, it is presumed that the thickening is caused by the reaction of the blended polyamide resin with the composition (5). It is considered that the thermal degradation proceeds because a double bond structure is generated in the main chain of the EVOH resin during the reaction, and this site serves as a reaction starting point to further cause a dehydration reaction to form a polyene structure in the main chain of the EVOH resin.

Meanwhile, it is considered that when a titanium compound is contained in the composition (5), the composition (5) is colored by titanium ions, and thus, it is common technical knowledge for those skilled in the art to avoid the use of a titanium compound.

However, in the present embodiment, contrary to such common technical knowledge, it has been found that the composition (5) excellent in thermal stability can be produced by combining the polyamide resin (D) and a specific trace amount of a titanium compound.

Titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed. It is presumed that when the polyamide resin (D) coexists with the titanium compound, the reaction occurring between the polyamide resin (D) and the composition (5) is also suppressed, the thickening tendency is suppressed, and the thermal stability is improved.

Meanwhile, it is considered that when the content of the titanium compound is within the specific range, the deterioration of the EVOH resin due to thermal decomposition caused by the titanium compound tends to be suppressed.

Additional Thermoplastic Resin

The present composition (5) can contain a thermoplastic resin other than the EVOH resin and the polyamide resin (D) within a range such that the effects of the present disclosure are not impaired (for example, usually 50 mass% or less, preferably 30 mass% or less, more preferably 20 mass% or less, particularly preferably 10 mass% or less of the present composition (5). The lower limit value is 0 mass%, for example, from 0 to 50 mass%). As the additional thermoplastic resin, the same one as Additional Thermoplastic Resin described in the first aspect can be used.

Additional Compounding Agent

The present composition (5) may contain a compounding agent (the compounding agent as used herein is used in the sense of excluding the titanium compound) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogencontaining resins and transition metals (e.g., a combination of polypropylene and cobalt), blends of carbon-carbon unsaturated bond-containing resins and transition metals (e.g., a combination of polybutadiene and cobalt), photooxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, antiblocking agents, and filling agents (e.g., aluminum and inorganic fillers). One of these compounds may be used alone or two or more types thereof may be used in combination.

Method for Producing Composition

The present composition (5) can be produced by, for example, mixing the EVOH resin, the titanium compound, and the polyamide resin (D) by a known method, for example, a dry blending method, a melt mixing method, a solution mixing method, an impregnation method, or the like, and among these, it is preferable to produce the present composition (5) by a method including a step of mixing the EVOH resin and the titanium compound. Furthermore, these production methods can be optionally combined.

Examples of the dry blending method include (I) a method in which pellets containing pellet-like EVOH resin and/or polyamide resin (D) and a titanium compound are dry-blended using a tumbler or the like.

Examples of the melt mixing method include (II) a method of melt-kneading a dry blend of pellets containing the EVOH resin and/or the polyamide resin (D) and the titanium compound to produce pellets or another molded product, (III) a method of adding the titanium compound to a melt of the EVOH resin and/or the polyamide resin (D) in a molten state and melt-kneading the mixture to produce pellets or another molded product, and a method of incorporating the titanium compound into the EVOH resin and/or the polyamide resin (D), producing pellets having a core-sheath structure in which the EVOH resin is a core and the polyamide resin (D) is a sheath using the EVOH resin and/or the polyamide resin (D), and melt-molding the pellets.

Examples of the solution mixing method include (IV) a method in which a solution is prepared using pellets containing commercially available EVOH resin and/or polyamide resin (D), a titanium compound is blended therein, solidification molding is performed to pelletize the mixture, solid-liquid separation is performed, and the mixture is dried, and (v) a method in which in the process of producing an EVOH resin, a solution of a polyamide resin (D) and/or a titanium compound is incorporated in an ethylene-vinyl ester copolymer solution and a uniform solution of the EVOH resin (water-alcohol solution or the like) before saponification, solidification molding is performed to pelletize the mixture, solid-liquid separation is performed, and the mixture is dried.

Examples of the impregnation method include (VI) a method of bringing pellets containing the EVOH resin and/or the polyamide resin (D) into contact with an aqueous solution containing a titanium compound, impregnating the pellets with the titanium compound, and then drying the pellets.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

In each of the above methods, the EVOH resin and/or the polyamide resin (D) and the titanium compound are preliminarily blended in predetermined proportions to prepare the composition (5) (masterbatch) having a high concentration of the titanium compound, and this composition (5) (masterbatch) is blended with the EVOH resin or the polyamide resin (D), whereby the resin composition (5) having a desired concentration can be produced.

As the drying method in each of the above production methods, various drying methods can be employed, and either static drying or fluidized drying may be employed. These methods can be performed in combination.

As described above, in the present embodiment, the above different methods can be combined. Among these, a melt-mixing method is preferable, and the method (II) is particularly preferable, from the viewpoint of productivity and producing the resin composition (5) that exhibits more significant effects of the present disclosure. In a case where the additional thermoplastic resin and an additional compounding agent are used, they are blended by a common process according to the aforementioned production method.

The present composition (5) produced by each of the production methods described above may be in any form, but is preferably in the form of pellets. The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (5) is not particularly limited, but is usually from 0.01 to 0.5 mass%, preferably from 0.05 to 0.35 mass%, particularly preferably from 0.1 to 0.3 mass%.

The water content of the present composition (5) is measured and calculated by the following method.

The mass ($W_1$) of the present composition (5) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (5) is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition (5). The lower limit is usually 0 mass%, for example, from 0 to 5 mass%.

The present composition (5) thus produced is excellent in thermal stability, and the ratio ("1091" + "1092" + "1093")/("1620" + "1621") of the sum of the color number "1091" (R: 72, G: 72, B: 56), the color number "1092" (R: 72, G: 72, B: 72), and the color number "1093" (R: 72, G: 72, B: 88) to the sum of the color number "1620" (R: 104, G: 88, B: 72) and the color number "1621" (R: 104, G: 88, B: 88) measured using a visual analyzer IRIS VA400 (available from Alpha mos) of the present composition (5) is usually 2.5 or less, preferably 2 or less, more preferably 1.5 or less. The lower limit value is usually 0, for example, usually from 0 to 2.5.

As the ratio is smaller, coloring associated with thermal degradation is suppressed, and thermal stability tends to be higher.

The difference of 0.5 in the ratio appears as a large difference in yield in actual production, and thus the difference is very large.

Molding Material

The present composition (5) thus produced is prepared into various forms such as a pellet, a powder form, or a liquid form, and is provided as a molding material for various molded products. In particular, in the present embodiment, in a case where the present EVOH resin composition is provided as a material for use in melt molding, the effects of the present disclosure tend to be more efficiently achieved, which is preferable.

Examples of the molded product include a single layer film molded from the present composition (5), and a multilayer structure having a layer composed of the present composition (5).

Multilayer Structure

A multilayer structure according to the fifth aspect of the present disclosure (hereinafter, referred to as "present multilayer structure (5)") contains the present composition (5) and includes at least one layer composed of the present composition (5). The layer composed of the present composition (5) in the present multilayer structure (5) (hereinafter, referred to simply as "present composition layer (5)") may be a single layer or a plurality of layers. When the present composition layer (5) is laminated with an additional substrate containing a thermoplastic resin other than the EVOH resin as a main component (hereinafter, the resin used for the substrate may be abbreviated as "substrate resin"), it is possible to further impart strength, protect the present composition layer (5) from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer (5) is denoted by a (a1, a2, ...), and the substrate resin layer is denoted by b (b1, b2, ...), the layer configuration of the present multilayer structure (5) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition (5) and a thermoplastic resin other than the EVOH resin, which is produced by remelt-molding an end, a defective product, or the like generated in the process of producing the present multilayer structure (5), is denoted by R, the layer configuration can also be b/R/a, b/R/a/b, b/R/a/R/b, b/a/R/a/b, b/R/a/R/a/R/b, or the like. The number of layers of the present multilayer structure (5) is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure (5), when an adhesive resin layer is used between the present composition layer (5) and the substrate resin layer, the adhesive resin layer is positioned on both sides of the present composition layer (5), and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer (5) and the substrate resin layer (including a case of interposing an adhesive resin layer therebetween) can be performed by a known method. Examples thereof include a method of melt-extrusion-laminating the substrate resin onto a film, a sheet, or the like of the present composition (5), a method of melt-extrusion-laminating the present composition (5) onto the substrate resin layer, a method of coextruding the present composition (5) and the substrate resin, a method of dry-laminating the present composition (5) (the present composition layer (5)) and the substrate resin (substrate resin layer) using a known adhesive such as an organic titanium compound, an isocyanate compound, a polyester-based compound, or a polyurethane compound, and a method of applying a solution of the present composition (5) onto the substrate resin and then removing the solvent. Among these, production is preferably performed by a method including a step of melt molding a layer containing the present composition layer (5), and specifically by a co-extrusion method, from the viewpoints of cost and the environment.

The present multilayer structure (5) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure (5) and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure (5) after the stretching treatment may be subjected to heat setting for the purpose of imparting dimensional stability. The heat setting can be performed by a well-known means; for example, the stretch-treated present multilayer structure (5) is heat-treated usually at a temperature of from 80 to 180°C and preferably at a temperature of from 100 to 165°C usually for about from 2 to 600 seconds while the stretch-treated present multilayer structure is kept in a state of tension.

In the case of using the stretch-treated present multilayer structure (5) as a shrink film, in order to impart heat shrinkability, the stretch-treated present multilayer structure is not subjected to the heat setting described above, but subjected to a treatment such as application of cool air to the present multilayer structure (5) after the stretching treatment to cool-set the structure.

The thickness of the present multilayer structure (5) (including a stretched multilayer structure), and the thicknesses of the present composition layer (5), the substrate resin layer, and the adhesive resin layer constituting the multilayer structure (5) cannot be determined unconditionally because they depend on the layer configuration, the type of the substrate resin, the type of the adhesive resin, the application, the packaging form, the required physical properties, and the like, but the thickness of the present multilayer structure (5) (including a stretched multilayer structure) is usually from 10 to 5000 $\mu$m, preferably from 30 to 3000 $\mu$m, particularly preferably from 50 to 2000 $\mu$m. The thickness of the present composition layer (5) is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer (5) to the substrate resin layer (the present composition layer (5)/the substrate resin layer) in the present multilayer structure (5) is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer (5) to the adhesive resin layer (the present composition layer (5)/the adhesive resin layer) in the present multilayer structure (5) is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure (5). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (5) or a packaging body such as a container or a lid member composed of the present multilayer structure (5), such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Sixth Aspect

The sixth aspect includes the following aspects [VI-1] to [VI-13].

[VI-1]
A composition containing an EVOH resin, a titanium compound, and a polyolefin resin (E), wherein

at least a portion of the EVOH resin is derived from biomass, and
a content of the titanium compound in terms of metal is 0.0001 ppm or more and less than 1 ppm relative to a mass of the composition.

[VI-2]
The composition according to [VI-1], wherein the content of the titanium compound in terms of metal is 0.0001 ppm or more and 0.8 ppm or less relative to the mass of the composition.
[VI-3]
The composition according to [VI-1] or [VI-2], wherein a content of the polyolefin resin (E) is from 60 to 95 mass% relative to the entirety of the composition.

[VI-4]

The composition according to any of [VI-1] to [VI-3], wherein a mass content ratio of the EVOH resin to the polyolefin resin (E) [EVOH resin/(E)] is from 1/99 to 99/1.

[VI-5]

The composition according to any of [VI-1] to [VI-4], wherein the EVOH resin has a biobased content of from 0.01 to 99%.

[VI-6]

The composition according to any of [VI-1] to [VI-5], wherein the EVOH resin has a biobased content of from 1 to 99%.

[VI-7]

A molding material containing the composition described in any of [VI-1] to [VI-6].

[VI-8]

A multilayer structure including a layer containing the composition described in any of [VI-1] to [VI-6].

[VI-9]

The multilayer structure according to [VI-8], further including an adhesive resin layer.

[VI-10]

A molded body including the multilayer structure described in [VI-8] or [VI-9].

[VI-11]

A food packaging body including the multilayer structure described in [VI-8] or [VI-9].

[VI-12]

A method for producing the composition described in any of [VI-1] to [VI-6], the method including a step of mixing the EVOH resin and the titanium compound.

[VI-13]

A method for producing the multilayer structure described in [VI-8] or [VI-9], the method including a step of melt-molding a layer containing the composition.

Hereinafter, the sixth aspect will be described based on embodiments for carrying out the sixth aspect. However, the present disclosure is not limited to the embodiments described below.

Composition

The composition according to the sixth aspect of the present disclosure (hereinafter may be referred to as "the present composition (6)") contains an EVOH resin as an essential component, and contains a specific trace amount of a titanium compound and a polyolefin resin (E).

Hereinafter, the respective components will be described.

EVOH Resin

The EVOH resin used in the present embodiment is at least partially derived from biomass, and the same EVOH resin as described in EVOH Resin in the first aspect can be used. The "present composition (1)" in the description of EVOH Resin of the first aspect is read as the "present composition (6)".

The content of the EVOH resin in the present composition is usually 1 mass% or more, preferably 3 mass% or more, more preferably from 5 to 40 mass%, still more preferably from 5 to 30 mass%, particularly preferably from 5 to 25 mass% or more, especially preferably from 5 to 20 mass%. When such a value is within the range described above, the effects of the present disclosure tend to be more effectively achieved.

Titanium Compound

As the titanium compound used in the present embodiment, the same titanium compound as described in Titanium Compound of the first aspect can be used. The "present composition (1)" in the description of Titanium Compound of the first aspect is read as the "present composition (6)".

Polyolefin Resin (E)

The polyolefin resin (E) used in the present embodiment is not particularly limited, but preferably it contains 80 mass% or more, more preferably 85 mass% or more, still more preferably 90 mass% or more of the most abundant monomer unit among the monomer units constituting the polyolefin resin (E).

Examples of the polyolefin resin (E) include polyolefin resins in a broad sense, such as linear low-density polyethylene (LLDPE), low-density polyethylene (LDPE), very-low-density polyethylene (VLDPE), medium-density polyethylene (MDPE), high-density polyethylene (HDPE), ionomers, ethylene-propylene (block or random) copolymers, ethylene-acrylic acid copolymers, ethylene-methacrylic acid copolymers, polypropylene (PP), propylene-$\alpha$-olefin ($\alpha$-olefin having from 4 to 20 carbons) copolymers, homopolymers or copolymers of olefins such as polybutene, polypentene, and polymethylpentene, or those obtained by graft-modifying homopolymers or copolymers of these olefins with an unsaturated carboxylic acid or an ester thereof. These may be used alone or in combination of two or more types, and among them, polypropylene (PP), polyethylene (MDPE, HDPE) and blends thereof are preferable to produce a molded product excellent in mechanical strength. In particular, polypropylene is optimal in terms of effect.

The polyolefin resin (E) used in the present embodiment has a density of usually 0.89 $g/cm^3$ or more, preferably 0.90 $g/cm^3$ or more and less than 0.98 $g/cm^3$. For example, when a molded product produced by using the present composition (6) is reused, a polyolefin resin (E) may be used for reinforcing the mechanical strength of the composition (6), and in the case of intending such an application, it is preferable to use a polyolefin resin (E) having a relatively high density to produce a resin composition having a higher density and excellent mechanical strength.

The content of the polyolefin resin (E) is usually from 60 to 99 mass%, preferably from 70 to 99 mass%, more preferably from 85 to 98 mass%, relative to the entire composition (6). When such a content proportion is equal to or more than the lower limit value, there is a tendency that coloring is easily suppressed, whereas when the content proportion is equal to or more than the lower limit value, an effect of suppressing thermal degradation tends to be achieved.

In the present composition (6), the mass content ratio of the EVOH resin to the polyolefin resin (E) [EVOH resin/(E)] is preferably from 1/99 to 99/1, more preferably from 2/98 to 75/25, still more preferably from 3/97 to 50/50, particularly preferably from 4/96 to 25/75, especially preferably from 5/95 to 10/90. When the mass content ratio of the EVOH resin to the polyolefin resin (E) is within the range described above, a more excellent effect of suppressing thermal degradation is achieved.

The total content of the EVOH resin and the polyolefin resin (E) in the present composition (6) is usually 70 mass% or more, preferably 80 mass% or more, more preferably 90 mass% or more. The upper limit of the total content of the EVOH resin and the polyolefin resin (E) is the total mass of the resin composition (6) excluding the titanium compound.

Here, it is generally known that the EVOH resin is deteriorated by heat. Although the mechanism is not clear, it is considered that the thermal degradation proceeds because a double bond structure is generated in the main chain of the EVOH resin during the reaction, and this site serves as a reaction starting point to further cause a dehydration reaction to form a polyene structure in the main chain of the EVOH resin.

Meanwhile, it is considered that when a titanium compound is contained in the composition (6), the composition (6) is colored by titanium ions, and thus, it is common technical knowledge for those skilled in the art to avoid the use of a titanium compound.

However, in the present embodiment, contrary to such common technical knowledge, it has been found that the composition (6) excellent in thermal stability can be produced by combining the polyolefin resin (E) and a specific trace amount of a titanium compound.

Titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed. It is presumed that, because the polyolefin resin (E) coexists with the titanium compound, a large number of double bond sites are distributed in the resin composition (6), and thus, further formation of a double bond is suppressed, and the thermal stability is further improved.

Meanwhile, it is considered that when the content of the titanium compound is within the specific range, the deterioration of the EVOH resin due to thermal decomposition caused by the titanium compound tends to be suppressed.

Additional Thermoplastic Resin

The present composition (6) can contain a thermoplastic resin other than the EVOH resin and the polyolefin resin (E) within a range such that the effects of the present disclosure are not impaired (for example, usually 50 mass% or less, preferably 30 mass% or less, more preferably 20 mass% or less, particularly preferably 10 mass% or less of the present composition (6). The lower limit value is 0 mass%, for example, from 0 to 50 mass%). As the additional thermoplastic resin, the same one as Additional Thermoplastic Resin described in the first aspect can be used.

Additional Compounding Agent

The present composition (6) may contain a compounding agent (the compounding agent as used herein is used in the sense of excluding the titanium compound) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogencontaining resins and transition metals (e.g., a combination of polypropylene and cobalt), blends of carbon-carbon unsaturated bond-containing resins and transition metals (e.g., a combination of polybutadiene and cobalt), photooxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, anti-blocking agents, and filling agents (e.g., aluminum and inorganic fillers). One of these compounds may be used alone or two or more types thereof may be used in combination.

Method for Producing Composition

The present composition (6) can be produced by, for example, mixing the EVOH resin, the titanium compound, and the polyolefin resin (E) by a known method, for example, a dry blending method, a melt mixing method, a solution mixing method, an impregnation method, or the like, and among these, it is preferable to produce the present composition (6) by a method including a step of mixing the EVOH resin and the titanium compound. Furthermore, these production methods can be optionally combined.

Examples of the dry blending method include (I) a method in which pellets containing pellet-like EVOH resin and/or polyolefin resin (E) and a titanium compound are dry-blended using a tumbler or the like.

Examples of the melt mixing method include (II) a method of melt-kneading a dry blend of pellets containing the EVOH resin and/or the polyolefin resin (E) and the titanium compound to produce pellets or another molded product, (III) a method of adding the titanium compound to a melt of the EVOH resin and/or the polyolefin resin (E) in a molten state and melt-kneading the mixture to produce pellets or another molded product, and a method of incorporating the titanium compound into the EVOH resin and/or the polyolefin resin (E), producing pellets having a core-sheath structure in which the EVOH resin is a core and the polyolefin resin (E) is a sheath using the EVOH resin and/or the polyolefin resin (E), and melt-molding the pellets.

Examples of the solution mixing method include (IV) a method in which a solution is prepared using pellets containing commercially available EVOH resin and/or polyolefin resin (E), a titanium compound is blended therein, solidification molding is performed to pelletize the mixture, solid-liquid separation is performed, and the mixture is dried, and (v) a method in which in the process of producing an EVOH resin, a solution of a polyolefin resin (E) and/or a titanium compound is incorporated in an ethylene-vinyl ester copolymer solution and a uniform solution of the EVOH resin (water-alcohol solution or the like) before saponification, solidification molding is performed to pelletize the mixture, solid-liquid separation is performed, and the mixture is dried.

Examples of the impregnation method include (VI) a method of bringing pellets containing the EVOH resin and/or the polyolefin resin (E) into contact with an aqueous solution containing a titanium compound, impregnating the pellets with the titanium compound, and then drying the pellets.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

In each of the above methods, the EVOH resin and/or the polyolefin resin (E) and the titanium compound are preliminarily blended in predetermined proportions to prepare the composition (6) (masterbatch) having a high concentration of the titanium compound, and this composition (6) (masterbatch) is blended with the EVOH resin or the polyolefin resin (E), whereby the resin composition (6) having a desired concentration can be produced.

As the drying method in each of the above production methods, various drying methods can be employed, and either static drying or fluidized drying may be employed. These methods can be performed in combination.

As described above, in the present embodiment, the above different methods can be combined. Among these, a melt-mixing method is preferable, and the method (II) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition (6) produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (6) is not particularly limited, but is usually from 0.01 to 0.5 mass%, preferably from 0.05 to 0.35 mass%, particularly preferably from 0.1 to 0.3 mass%.

The water content of the present composition (6) is measured and calculated by the following method.

The mass ($W_1$) of the present composition (6) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (6) is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition (6). The lower limit is usually 0 mass%, for example, from 0 to 5 mass%.

The present composition (6) thus produced is excellent in thermal stability, and the ratio ("1108" + "1109"/"1331") of the sum of the color number "1108" (R: 72, G: 88, B: 72) and the color number "1109" (R: 72, G: 88, B: 88) to the color number "1331" (R: 88, G: 56, B: 56) measured using a visual analyzer IRIS VA400 (available from Alpha mos) of the present composition (6) is usually less than 2, preferably 1.5 or less, more preferably 1 or less. The lower limit value is usually 0, for example, usually 0 or more and less than 2.

As the ratio is smaller, coloring associated with thermal degradation is suppressed, and thermal stability tends to be higher.

The difference of 0.5 in the ratio appears as a large difference in yield in actual production, and thus the difference is very large.

Molding Material

The present composition (6) thus produced is prepared into various forms such as a pellet, a powder form, or a liquid form, and is provided as a molding material for various molded products. In particular, in the present disclosure, when the composition is provided as a material for melt-molding, the effect of the present disclosure tends to be obtained more efficiently, which is preferable.

Examples of the molded product include a single layer film molded from the present composition (6), and a multilayer structure having a layer composed of the present composition (6).

Multilayer Structure

A multilayer structure according to the sixth aspect of the present disclosure (hereinafter, referred to as "present multilayer structure (6)") contains the present composition (6) and includes at least one layer composed of the present composition (6). The layer composed of the present composition (6) in the present multilayer structure (6) (hereinafter, referred to simply as "present composition layer (6)") may be a single layer or a plurality of layers. When the present composition layer (6) is laminated with an additional substrate containing a thermoplastic resin other than the EVOH resin as a main component (hereinafter, the resin used for the substrate may be abbreviated as "substrate resin"), it is possible to further impart strength, protect the present composition layer (6) from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer (6) is denoted by a (a1, a2, ...), and the substrate resin layer is denoted by b (b1, b2, ...), the layer configuration of the present multilayer structure (6) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition (6) and a thermoplastic resin other than the EVOH resin, which is produced by remelt-molding an end, a defective product, or the like generated in the process of producing the present multilayer structure (6), is denoted by R, the layer configuration can also be b/R/a, b/R/a/b, b/R/a/R/b, b/a/R/a/b, b/R/a/R/a/R/b, or the like. The number of layers of the present multilayer structure (6) is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure (6), when an adhesive resin layer is used between the present composition layer (6) and the substrate resin layer, the adhesive resin layer is positioned on both sides of the present composition layer (6), and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer (6) and the substrate resin layer (including a case of interposing an adhesive resin layer therebetween) can be performed by a known method. Examples thereof include a method of melt-extrusion-laminating the substrate resin onto a film, a sheet, or the like of the present composition (6), a method of melt-extrusion-laminating the present composition (6) onto the substrate resin layer, a method of coextruding the present composition (6) and the substrate resin, a method of dry-laminating the present composition (6) (the present composition layer (6)) and the substrate resin (substrate resin layer) using a known adhesive such as an organic titanium compound, an isocyanate compound, a polyester-based compound, or a polyurethane compound, and a method of applying a solution of the present composition (6) onto the substrate resin and then removing the solvent. Among these, production is preferably performed by a method including a step of melt molding a layer containing the present composition layer (6), and specifically by a co-extrusion method, from the viewpoints of cost and the environment.

The present multilayer structure (6) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure (6) and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure (6) after the stretching treatment may be subjected to heat setting for the purpose of imparting dimensional stability. The heat setting can be performed by a well-known means; for example, the stretch-treated present multilayer structure (6) is heat-treated usually at a temperature of from 80 to 180°C and preferably at a temperature of from 100 to 165°C usually for about from 2 to 600 seconds while the stretch-treated present multilayer structure is kept in a state of tension.

In the case of using the stretch-treated present multilayer structure (6) as a shrink film, in order to impart heat shrinkability, the stretch-treated present multilayer structure is not subjected to the heat setting described above, but subjected to a treatment such as application of cool air to the present multilayer structure (6) after the stretching treatment to cool-set the structure.

The thickness of the present multilayer structure (6) (including a stretched multilayer structure), and the thicknesses of the present composition layer (6), the substrate resin layer, and the adhesive resin layer constituting the multilayer structure (6) cannot be determined unconditionally because they depend on the layer configuration, the type of the substrate resin, the type of the adhesive resin, the application, the packaging form, the required physical properties, and the like, but the thickness of the present multilayer structure (6) (including a stretched multilayer structure) is usually from 10 to 5000 $\mu$m, preferably from 30 to 3000 $\mu$m, particularly preferably from 50 to 2000 $\mu$m. The thickness of the present composition layer (6) is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer (6) to the substrate resin layer (the present composition layer (6)/the substrate resin layer) in the present multilayer structure (6) is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer (6) to the adhesive resin layer (the present composition layer (6)/the adhesive resin layer) in the present multilayer structure (6) is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure (6). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (6) or a packaging body such as a container or a lid member composed of the present multilayer structure (6), such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Seventh Aspect

The seventh aspect includes the following aspects [VII-1] to [VII-13].

[VII-1]
A composition containing an EVOH resin, a titanium compound, and an olefin elastomer (F), wherein

at least a portion of the EVOH resin is derived from biomass, and
a content of the titanium compound in terms of metal is 0.0001 ppm or more and less than 1 ppm relative to a mass of the composition.

[VII-2]
The composition according to [VII-1], wherein the content of the titanium compound in terms of metal is 0.0001 ppm or more and 0.8 ppm or less relative to the mass of the composition.
[VII-3]
The composition according to [VII-1] or [VII-2], wherein a content of the olefin elastomer (F) is from 1 to 40 mass% relative to the entirety of the composition.
[VII-4]
The composition according to any of [VII-1] to [VII-3], wherein a mass content ratio of the EVOH resin to the olefin elastomer (F) [EVOH resin/(F)] is from 1/99 to 99/1.
[VII-5]
The composition according to any of [VII-1] to [VII-4], wherein the EVOH resin has a biobased content of from 0.01 to 99%.
[VII-6]
The composition according to any of [VII-1] to [VII-5], wherein the EVOH resin has a biobased content of from 1 to 99%.
[VII-7]
A molding material containing the composition described in any of [VII-1] to [VII-6].
[VII-8]
A multilayer structure including a layer containing the composition described in any of [VII-1] to [VII-6].
[VII-9]
The multilayer structure according to [VII-8], further including an adhesive resin layer.
[VII-10]
A molded body including the multilayer structure described in [VII-8] or [VII-9].
[VII-11]
A food packaging body including the multilayer structure described in [VII-8] or [VII-9].
[VII-12]
A method for producing the composition described in any of [VII-1] to [VII-6], the method including a step of mixing the EVOH resin and the titanium compound.
[VII-13]
A method for producing the multilayer structure described in [VII-8] or [VII-9], the method including a step of melt-molding a layer containing the composition.

Hereinafter, the seventh aspect will be described based on embodiments for carrying out the seventh aspect. However, the present disclosure is not limited to the embodiments described below.

Composition

The composition according to the seventh aspect of the present disclosure (hereinafter may be referred to as "the present composition (7)") contains an EVOH resin as an essential component and contains a specific trace amount of a titanium compound and a polyamide resin (F).
Hereinafter, the respective components will be described.

EVOH Resin

The EVOH resin used in the present embodiment is at least partially derived from biomass, and the same EVOH resin as described in EVOH Resin in the first aspect can be used. The "present composition (1)" in the description of EVOH Resin of the first aspect is read as the "present composition (7)".
The content of the EVOH resin in the present composition is usually 1 mass% or more, preferably 10 mass% or more, more preferably 50 mass% or more, still more preferably 60 mass% or more, particularly preferably 70 mass% or more, especially preferably 75 mass% or more, yet especially preferably 80 mass% or more. The upper limit of the content of the EVOH resin is usually 99 mass% or less, preferably 95 mass% or less, more preferably 93 mass% or less. When such a value is within the range described above, the effects of the present disclosure tend to be more effectively achieved.

Titanium Compound

As the titanium compound used in the present embodiment, the same titanium compound as described in Titanium Compound of the first aspect can be used. The "present composition (1)" in the description of Titanium Compound of the first aspect is read as the "present composition (7)".

Olefin Elastomer (F)

The olefin elastomer (F) used in the present embodiment refers to an elastomer having an olefin, which is an aliphatic hydrocarbon monomer containing a carbon-carbon double bond, as a main chain, and is usually a lipophilic elastomer that is a polymer having a number average molecular weight of 10000 or more. Specifically, the elastomer is an aliphatic rubber and/or an ionomer (herein, excluding the aliphatic rubber), and particularly preferably an aliphatic rubber. One of the aliphatic rubbers or the ionomers may be used alone, or two or more types thereof may be used in combination.

Hereinafter, the aliphatic rubber used in the present embodiment will be described in detail.

The aliphatic rubber is preferably an ethylene-$\alpha$-olefin copolymer rubber having an ethylene unit and an $\alpha$-olefin unit.

The number of carbons of the $\alpha$-olefin unit used in the ethylene-$\alpha$-olefin copolymer rubber is preferably from 3 to 8. Examples of the $\alpha$-olefin having from 3 to 8 carbons include 1-propylene, 1-butene, 2-methylpropylene, 1-pentene, 3-methyl-1-butene, 1-hexene, 4-methyl-1-pentene, and 1-octene. Among these, preferred is an $\alpha$-olefin having from 3 to 8 carbons and having a carbon-carbon double bond at a terminal carbon atom, such as 1-propylene, 1-butene, 1-hexene, or 1-octene. Only one $\alpha$-olefin of the ethylene-$\alpha$-olefin copolymer rubber may be copolymerized with ethylene, or two or more types thereof may be copolymerized with ethylene.

The ethylene-$\alpha$-olefin copolymer rubber may have, in addition to the ethylene unit and the $\alpha$-olefin unit having from 3 to 8 carbons, an additional monomer unit such as a monomer unit based on a non-conjugated diene (non-conjugated diene unit). Examples of the non-conjugated diene include chain non-conjugated dienes such as 1,4-hexadiene, 1,6-octadiene, 2-methyl-1,5-hexadiene, 6-methyl-1,5-heptadiene, and 7-methyl-1,6-octadiene; and cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, and 6-chloromethyl-5-isopropenyl-2-norbornene. These may be used alone or in combination of two or more types. Among these, 5-ethylidene-2-norbornene and dicyclopentadiene are preferable.

The content of the ethylene unit in the ethylene-$\alpha$-olefin copolymer rubber is from 50 to 80 mass%, preferably from 55 to 77 mass%, more preferably from 60 to 75 mass%, relative to the total amount of the content of the ethylene unit and the content of the $\alpha$-olefin unit.

The content of the $\alpha$-olefin unit in the ethylene-$\alpha$-olefin copolymer rubber is from 20 to 50 mass%, preferably from 22 to 45 mass%, more preferably from 25 to 40 mass%, relative to the total amount of the content of the ethylene unit and the content of the $\alpha$-olefin unit.

The content of the ethylene unit and the content of the $\alpha$-olefin unit in the ethylene-$\alpha$-olefin copolymer rubber can be determined by infrared spectroscopy. The content of the non-conjugated diene unit in the ethylene-$\alpha$-olefin copolymer rubber is usually from 0 to 10 mass%, preferably from 0 to 5 mass%, relative to the entire ethylene-$\alpha$-olefin copolymer rubber. The content of the non-conjugated diene unit can be determined by infrared spectroscopy.

Examples of the ethylene-$\alpha$-olefin copolymer rubber include random copolymers and/or block copolymers of two or more olefin monomers, copolymers of olefin monomers and diene monomers, and/or hydrogenated products thereof.

Examples of the block copolymer of olefin monomers (olefin block copolymer) include ethylene-$\alpha$-olefin copolymers such as ethylene-propylene copolymers, ethylene-butene copolymers, ethylene-hexene copolymers, and ethylene-octene copolymers; propylene-$\alpha$-olefin copolymers such as propyleneethylene copolymers and propylene-butene copolymers; and butene-$\alpha$-olefin copolymers such as butene-ethylene copolymers and butene-propylene copolymers.

Examples of the random copolymer of olefin monomers (olefin random copolymer) include those obtained by randomly copolymerizing two or more of the olefin monomers.

The olefin block copolymer and the olefin random copolymer can be obtained as commercially available products, and examples thereof include TAFMER (trade name) series available from Mitsui Chemicals, Inc., and Engage (trade name) series available from The Dow Chemical Company.

Examples of the copolymer of an olefin monomer and a diene monomer and/or a hydrogenated product thereof include ethylene-propylene rubber (EPM), ethylene-propylene-diene-based rubber (EPDM), and butadiene rubber (BR).

The ionomer is usually a metal salt of an ethylene-unsaturated carboxylic acid copolymer, and the carboxy group in the ionomer is neutralized with a metal.

The density of the olefin elastomer (F) is usually less than $0.890$ g/cm$^3$, particularly preferably $0.820$ g/cm$^3$ or more and less than $0.890$ g/cm$^3$. Examples of the olefin elastomer (F) satisfying such conditions include low-crystalline ethylene-$\alpha$-olefin random copolymers, EPM, and EPDM.

Further, the glass transition temperature of the olefin elastomer (F) is usually from -110 to 0°C, preferably from -80 to -20°C, more preferably from -70 to -40°C. Since the glass transition temperature of the olefin elastomer (F) is in a temperature range much lower than room temperature (25°C), and the olefin elastomer has low crystallinity, the resulting resin composition (7) is very excellent in flexibility in a wide temperature range from low temperature to room temperature. In addition, it is possible to impart a high accumulated fatigue absorbing effect by blending the olefin elastomer (F) with the EVOH resin. Here, the glass transition temperature means a temperature at which a formless portion of the olefin elastomer (F) transitions from a glass state to a rubber state, and can be usually measured by a method in accordance with JIS K 7121 using a differential scanning calorimeter.

The melt flow rate (MFR) of the olefin elastomer (F) is usually from 0.01 to 150 g/10 min, preferably from 0.1 to 50 g/10 min, more preferably from 1 to 25 g/10 min, still more preferably from 2 to 10 g/10 min, under the conditions of 190°C and a load of 2160 g.

When the melt viscosity of the EVOH resin is closer to the melt viscosity of the olefin elastomer (F), the melt-kneading is easily performed, and the resin composition (7) in which the olefin elastomer (F) is uniformly dispersed in the EVOH resin is easily produced, and thus, the resin composition (7) excellent in bending resistance and transparency is easily produced. Specifically, the ratio of the MFR value (EVOH resin/olefin elastomer (F)) measured under the conditions of 210°C and a load of 2160 g is usually from 0.1 to 10, preferably from 0.3 to 4, more preferably from 0.5 to 3.

When the olefin elastomer (F) is blended with a highly-crystalline EVOH resin based on characteristics such as low crystallinity or rubber property, a resin composition (7) provided with flexibility can be produced, and thus, a composition (7) excellent in bending resistance can be provided.

The content of the olefin elastomer (F) is usually from 1 to 40 mass%, preferably from 3 to 30 mass%, more preferably from 5 to 25 mass% relative to the entire composition (7). When such a content proportion is equal to or less than the upper limit value, there is a tendency that coloring is easily suppressed, whereas when the content proportion is equal to or more than the lower limit value, an effect of suppressing thermal degradation tends to be achieved.

In the present composition (7), the mass content ratio of the EVOH resin to the olefin elastomer (F) [EVOH resin/(F)] is preferably from 1/99 to 99/1, more preferably from 25/75 to 98/2, still more preferably from 50/50 to 97/3, particularly preferably from 65/35 to 96/4, especially preferably from 75/25 to 95/5. When the mass content ratio of the EVOH resin to the olefin elastomer (F) is within the above range, a more excellent effect of coloring suppression is achieved.

The total content of the EVOH resin and the olefin elastomer (F) in the present composition (7) is usually 70 mass% or more, preferably 80 mass% or more, more preferably 90 mass% or more. The upper limit of the total content of the EVOH resin and the olefin elastomer (F) is the total mass of the resin composition (7) excluding the titanium compound.

Here, it is generally known that the EVOH resin is deteriorated by heat. Although the mechanism is not clear, it is considered that the thermal degradation proceeds because a double bond structure is generated in the main chain of the EVOH resin during the reaction, and this site serves as a reaction starting point to further cause a dehydration reaction to form a polyene structure in the main chain of the EVOH resin.

Meanwhile, it is considered that when a titanium compound is contained in the composition (7), the composition (7) is colored by titanium ions, and thus, it is common technical knowledge for those skilled in the art to avoid the use of a titanium compound.

However, in the present embodiment, contrary to such common technical knowledge, it has been found that the composition (7) excellent in thermal stability can be produced by combining the olefin elastomer (F) and a specific trace amount of a titanium compound.

Titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed. In addition, because the olefin elastomer is distributed in the EVOH resin by coexisting with the titanium compound, it is presumed that formation of further double bonds is suppressed and thermal stability is further improved.

Meanwhile, it is considered that when the content of the titanium compound is within the specific range, the deterioration of the EVOH resin due to thermal decomposition caused by the titanium compound tends to be suppressed.

Additional Thermoplastic Resin

The present composition (7) can contain a thermoplastic resin other than the EVOH resin and the olefin elastomer (F) within a range such that the effects of the present disclosure are not impaired (for example, usually 50 mass% or less, preferably 30 mass% or less, more preferably 20 mass% or less, particularly preferably 10 mass% or less of the present composition (7). The lower limit value is 0 mass%, for example, from 0 to 50 mass%). As the additional thermoplastic resin, the same one as Additional Thermoplastic Resin described in the first aspect can be used.

Additional Compounding Agent

The present composition (7) may contain a compounding agent (the compounding agent as used herein is used in the sense of excluding the titanium compound) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogencontaining resins and transition metals (e.g., a combination of polypropylene and cobalt), blends of carbon-carbon unsaturated bond-containing resins and transition metals (e.g., a combination of polybutadiene and cobalt), photooxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, antiblocking agents, and filling agents (e.g., aluminum and inorganic fillers). One of these compounds may be used alone or two or more types thereof may be used in combination.

Method for Producing Composition

The present composition (7) can be produced by, for example, mixing the EVOH resin, the titanium compound, and the olefin elastomer (F) by a known method, for example, a dry blending method, a melt mixing method, a solution mixing method, an impregnation method, or the like, and among these, it is preferable to produce the present composition (7) by a method including a step of mixing the EVOH resin and the titanium compound. Furthermore, these production methods can be optionally combined.

Examples of the dry blending method include (I) a method in which pellets containing pellet-like EVOH resin and/or olefin elastomer (F) and a titanium compound are dry-blended using a tumbler or the like.

Examples of the melt mixing method include (II) a method of melt-kneading a dry blend of pellets containing the EVOH resin and/or the olefin elastomer (F) and the titanium compound to produce pellets or another molded product, (III) a method of adding the titanium compound to a melt of the EVOH resin and/or the olefin elastomer (F) in a molten state and melt-kneading the mixture to produce pellets or another molded product, and a method of incorporating the titanium compound into the EVOH resin and/or the olefin elastomer (F), producing pellets having a core-sheath structure in which the EVOH resin is a core and the olefin elastomer (F) is a sheath using the EVOH resin and/or the olefin elastomer (F), and melt-molding the pellets.

Examples of the solution mixing method include (IV) a method in which a solution is prepared using pellets containing commercially available EVOH resin and/or olefin elastomer (F), a titanium compound is blended therein, solidification molding is performed to pelletize the mixture, solid-liquid separation is performed, and the mixture is dried, and (V) a method in which in the process of producing an EVOH resin, a solution of an olefin elastomer (F) and/or a titanium compound is incorporated in an ethylene-vinyl ester copolymer solution and a uniform solution of the EVOH resin (water-alcohol solution or the like) before saponification, solidification molding is performed to pelletize the mixture, solid-liquid separation is performed, and the mixture is dried.

Examples of the impregnation method include (VI) a method of bringing pellets containing the EVOH resin and/or the olefin elastomer (F) into contact with an aqueous solution containing a titanium compound, impregnating the pellets with the titanium compound, and then drying the pellets.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

In each of the above methods, the EVOH resin and/or the olefin elastomer (F) and the titanium compound are preliminarily blended in predetermined proportions to prepare the composition (7) (masterbatch) having a high concentration of the titanium compound, and this composition (7) (masterbatch) is blended with the EVOH resin or the olefin elastomer (F), whereby the resin composition (7) having a desired concentration can be produced.

As the drying method in each of the above production methods, various drying methods can be employed, and either static drying or fluidized drying may be employed. These methods can be performed in combination.

As described above, in the present embodiment, the above different methods can be combined. Among these, a melt-mixing method is preferable, and the method (II) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition (7) produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition (7) is not particularly limited, but is usually from 0.01 to 0.5 mass%, preferably from 0.05 to 0.35 mass%, particularly preferably from 0.1 to 0.3 mass%.

The water content of the present composition (7) is measured and calculated by the following method.

The mass ($W_1$) of the present composition (7) before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition (7) is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition (7). The lower limit is usually 0 mass%, for example, from 0 to 5 mass%.

The present composition (7) thus produced is excellent in thermal stability, and the ratio ("1363" + "1364" + "1365" + "1366")/("1381" + "1382") of the sum of the color number "1363" (R: 88, G: 88, B: 56), the color number "1364" (R: 88, G: 88, B: 72), the color number "1365" (R: 88, G: 88, B: 88), and the color number "1366" (R: 88, G: 88, B: 104) to the sum of the color number "1381" (R: 88, G: 104, B: 88) and the color number "1382" (R: 88, G: 104, B: 104) measured using a visual analyzer IRIS VA400 (available from Alpha mos) of the present composition (7) is usually less than 5, preferably 4 or less, more preferably 3 or less. The lower limit value is usually 0, for example, usually 0 or more and less than 5.

As the ratio is smaller, coloring associated with thermal degradation is suppressed, and thermal stability tends to be higher.

The difference of 0.5 in the ratio appears as a large difference in yield in actual production, and thus the difference is very large.

Molding Material

The present composition (7) thus produced is prepared into various forms such as a pellet, a powder form, or a liquid form, and is provided as a molding material for various molded products. In particular, in the present embodiment, in a case where the present EVOH resin composition is provided as a material for use in melt molding, the effects of the present disclosure tend to be more efficiently achieved, which is preferable.

Examples of the molded product include a single layer film molded from the present composition (7), and a multilayer structure having a layer composed of the present composition (7).

Multilayer Structure

A multilayer structure according to the seventh aspect of the present disclosure (hereinafter, referred to as "present multilayer structure (7)") contains the present composition (7) and includes at least one layer composed of the present composition (7). The layer composed of the present composition (7) in the present multilayer structure (7) (hereinafter referred to simply as "present composition layer (7)") may be a single layer or a plurality of layers. When the present composition layer (7) is laminated with an additional substrate containing a thermoplastic resin other than the EVOH resin as a main component (hereinafter, the resin used for the substrate may be abbreviated as "substrate resin"), it is possible to further impart strength, protect the present composition layer (7) from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin resins in a broad sense including (unmodified) polyolefin resins, such as polybutene, polypentene, polycyclic olefin resins (polymers having a cyclic olefin structure in at least one of a main chain or a side chain), and modified olefin resins, such as unsaturated carboxylic acid-modified polyolefin resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide resins, polyolefin resins, polyester-based resins, and polystyrene-based resins, which are hydrophobic resins, are preferable. Polyolefin resins such as polyethylene-based resins, polypropylene-based resins, polycyclic olefin resins, and unsaturated carboxylic acid-modified polyolefin resins thereof are more preferable.

When the present composition layer (7) is denoted by a (a1, a2, ...), and the substrate resin layer is denoted by b (b1, b2, ...), the layer configuration of the present multilayer structure (7) may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition (7) and a thermoplastic resin other than the EVOH resin, which is produced by remelt-molding an end, a defective product, or the like generated in the process of producing the present multilayer structure (7), is denoted by R, the layer configuration can also be b/R/a, b/R/a/b, b/R/a/R/b, b/a/R/a/b, b/R/a/R/a/R/b, or the like. The number of layers of the present multilayer structure (7) is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers produced by chemically bonding an unsaturated carboxylic acid or anhydride thereof to a polyolefin resin by an addition reaction, a graft reaction, or the like. Examples of the carboxy group-containing modified polyolefin polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin resins, and maleic anhydride graft-modified polyolefin resins. One of these may be used alone, or two or more types of these may be used in combination.

In the present multilayer structure (7), when an adhesive resin layer is used between the present composition layer (7) and the substrate resin layer, the adhesive resin layer is positioned on both sides of the present composition layer (7), and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer (7) and the substrate resin layer (including a case of interposing an adhesive resin layer therebetween) can be performed by a known method. Examples thereof include a method of melt-extrusion-laminating the substrate resin onto a film, a sheet, or the like of the present composition (7), a method of melt-extrusion-laminating the present composition (7) onto the substrate resin layer, a method of coextruding the present composition (7) and the substrate resin, a method of dry-laminating the present composition (7) (the present composition layer (7)) and the substrate resin (substrate resin layer) using a known adhesive such as an organic titanium compound, an isocyanate compound, a polyester-based compound, or a polyurethane compound, and a method of applying a solution of the present composition (7) onto the substrate resin and then removing the solvent. Among these, production is preferably performed by a method including a step of melt molding a layer containing the present composition layer (7), and specifically by a co-extrusion method, from the viewpoints of cost and the environment.

The present multilayer structure (7) may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure (7) and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure (7) after the stretching treatment may be subjected to heat setting for the purpose of imparting dimensional stability. The heat setting can be performed by a well-known means; for example, the stretch-treated present multilayer structure (7) is heat-treated usually at a temperature of from 80 to 180°C and preferably at a temperature of from 100 to 165°C usually for about from 2 to 600 seconds while the stretch-treated present multilayer structure is kept in a state of tension.

In the case of using the stretch-treated present multilayer structure (7) as a shrink film, in order to impart heat shrinkability, the stretch-treated present multilayer structure is not subjected to the heat setting described above, but subjected to a treatment such as application of cool air to the present multilayer structure (7) after the stretching treatment to cool-set the structure.

The thickness of the present multilayer structure (7) (including a stretched multilayer structure), and the thicknesses of the present composition layer (7), the substrate resin layer, and the adhesive resin layer constituting the multilayer structure (7) cannot be determined unconditionally because they depend on the layer configuration, the type of the substrate resin, the type of the adhesive resin, the application, the packaging form, the required physical properties, and the like, but the thickness of the present multilayer structure (7) (including a stretched multilayer structure) is usually from 10 to 5000 $\mu$m, preferably from 30 to 3000 $\mu$m, particularly preferably from 50 to 2000 $\mu$m. The thickness of the present composition layer (7) is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present composition layer (7) to the substrate resin layer (the present composition layer (7)/the substrate resin layer) in the present multilayer structure (7) is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer (7) to the adhesive resin layer (the present composition layer (7)/the adhesive resin layer) in the present multilayer structure (7) is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure (7). In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition (7) or a packaging body such as a container or a lid member composed of the present multilayer structure (7), such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Examples

Hereinafter, the present disclosure will be more specifically described with reference to Examples, but the present disclosure is not limited to the Examples below as long as it does not deviate from the gist of the present disclosure. In the Examples, "parts" and "%" are based on mass.

Prior to Examples, the EVOH resin described below was prepared.

Production of Ethylene-Vinyl Acetate Copolymer

A polymerization can was charged with 100 parts of vinyl acetate in which the carbon of a vinyl group moiety was derived from biomass, and 16 parts of methanol. The inside of the system was once replaced with a nitriding gas, and then replaced with ethylene, and the ethylene was press-fitted until the ethylene pressure reached 4.12 MPa. The mixture was heated to 67°C under ethylene pressure with stirring and caused to react for a total of 6 hours while charging a peroxyester at a rate of 0.05 parts/hr for 4 hours, to thereby produce an ethylene-vinyl acetate copolymer. The polymerization rate of the ethylene-vinyl acetate copolymer thus produced was 56%.

Production of EVOH Resin

To 100 parts of a methanol solution containing 50% of the ethylene-vinyl acetate copolymer, 70 parts of a methanol solution containing 0.02 equivalents of sodium hydroxide relative to residual vinyl acetate groups in the copolymer was supplied, and saponification reaction was performed at 80°C for 80 minutes.

Next, 100 parts of an aqueous methanol solution having a water content of 50% was supplied to a methanol solution of the EVOH resin in an azeotropic state, and methanol was distilled out until the resin content concentration in the methanol/aqueous solution of the EVOH resin reached 40%, to thereby produce a completely transparent methanol/water uniform solution of EVOH resin.

Subsequently, the produced methanol/aqueous solution of EVOH resin was solidified into a thin plate shape and then cut with a knife to produce dice-shaped pellets each having a side of 3 mm.

The produced dice-shaped pellets were washed with 250 parts of treatment water containing 5 parts of acetic acid relative to 100 parts of the pellets for 30 minutes. The washing was performed three times by replacing the treatment water. Then, 100 parts of the resultant dice pellets were washed with 250 parts of water for 30 minutes. The washing was performed twice by replacing water. Subsequently, the resultant dice pellets were dried at 118°C for 8 hours under a nitriding airflow having an oxygen concentration of 0.5 vol% or less, to thereby produce pellets of an EVOH resin (ethylene structural unit content: 32 mol%, saponification degree: 99.7 mol%, biobased content: 64% (content of bio-vinyl alcohol structural unit in the entire vinyl alcohol structural unit: 94%)).

First Aspect

Example I-1

Production of Composition Pellets Containing Titanium Compound

The produced EVOH resin pellets and, as a titanium compound, rutile type titanium(IV) oxide having an average particle size of 5 $\mu$m or less (available from FUJIFILM Wako Pure Chemical Corporation) were melt-kneaded with a tabletop kneader "Xplore-HTMC 15HT (15 mL volume)" (available from Rheolab Ltd.) under kneading conditions described below so that the content in terms of metal was 0.1 ppm relative to the mass of the composition, and the extruded and discharged strand was cooled by air cooling and solidified to produce composition pellets.

Kneading Conditions

- Small kneader temperature: 200°C
- Screw shape: biaxial conical type
- Screw rotation: same direction
- Kneading time: 10 minutes

Example I-2, Comparative Example I-1 to I-3

Composition pellets were produced in the same manner as in Example I-1 except that the content of titanium oxide was changed as described in Table I-1 below.

The produced composition pellets of Examples I-1 and I-2 and Comparative Examples I-1 to I-3 were subjected to the thermal stability evaluation described below. The results are presented in Table I-1 below.

Thermal Stability Evaluation

Using 5 mg of the produced composition pellets, the temperature difference (°C) between the temperature at which the mass is reduced by 5% and the temperature at which the mass is reduced by 10% was calculated with a thermogravimetric analyzer (Pyris 1 TGA, available from Perkin Elmer, Inc.) in a nitriding atmosphere under the conditions of an air flow rate of 20 mL/min, a temperature increase rate of 10°C/min, and a temperature range of from 30 to 550°C. A larger temperature difference (°C) between the temperature at which the mass is reduced by 5% and the temperature at which the mass is reduced by 10% means slower thermal decomposition and better thermal stability.

[Table I-1]

| | Bio EVOH (%) | Content of titanium compound in terms of metal (ppm) | Difference in temperature at 5% mass reduction and 10% mass reduction (°C) |
|---|---|---|---|
| Example I-1 | 100 | 0.1 | 14.1 |
| Example I-2 | 100 | 0.5 | 12.8 |
| Comparative Example I-1 | 100 | 0 | 11.4 |
| Comparative Example I-2 | 100 | 3 | 10.7 |
| Comparative Example I-3 | 100 | 1 | 10.2 |

The results shown in Table I-1 indicate that the composition of Example I-1 or I-2 containing a specific trace amount of a titanium compound exhibited a large temperature difference (°C) between the temperature at which the mass is reduced by 5% and the temperature at which the mass is reduced by 10% as compared with the composition of Comparative Example I-1 not containing a titanium compound and the compositions of Comparative Examples I-2 and I-3 containing a titanium compound in an amount exceeding a specific range (for example, Example I-1 was improved about 1.23 times as compared to Comparative Example I-1, about 1.31 times as compared with Comparative Example I-2, and about 1.38 times as compared to Comparative Example I-3), and thus had excellent thermal stability. In addition, a multilayer structure including a layer composed of the composition of Example I-1 or I-2 is also excellent in thermal stability, and a molded body and a food packaging body containing such a multilayer structure are also excellent in thermal stability.

Second Aspect

Example II-1

Production of Composition Pellets Containing Titanium Compound and Alkaline Earth Metal Compound (A)

There were used the produced EVOH resin pellets, rutile type titanium(IV) oxide (available from FUJIFILM Wako Pure Chemical Corporation) having an average particle size of 5 $\mu$m or less as a titanium compound, and magnesium oxide (available from FUJIFILM Wako Pure Chemical Corporation) as an alkaline earth metal compound (A).

Melt kneading was performed under kneading conditions described below with a tabletop kneader "Xplore-HTMC 15HT (15 mL volume)" (available from Rheolab Ltd.) so that in the EVOH resin pellets, the content of titanium oxide in terms of metal was 0.04 ppm relative to the mass of the composition, and the content of magnesium oxide in terms of metal was 1200 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example II-2

A composition was produced in the same manner as in Example II-1, except that the content of magnesium oxide in terms of metal was changed to 40 ppm relative to the mass of the composition in Example II-1.

Example II-3

A composition was produced in the same manner as in Example II-1, except that the content of titanium oxide in terms of metal was changed to 0.1 ppm relative to the mass of the composition, and the content of magnesium oxide in terms of metal was changed to 200 ppm relative to the mass of the composition in Example II-1.

Comparative Example II-1

A composition was produced in the same manner as in Example II-1, except that the content of titanium oxide in terms of metal was changed to 3 ppm relative to the mass of the composition, and the content of magnesium oxide in terms of metal was changed to 0 ppm relative to the mass of the composition in Example II-1.

The produced resin compositions of Examples II-1 to II-3 and Comparative Example II-1 were subjected to the thermal stability evaluation described below. The results are shown in Table II-1 below.

Thermal Stability Evaluation

The produced composition was cut with a nipper, and the resultant pulverized product was used as a sample. The ratio ("1381" + "1382")/("1636" + "1637" + "1638") of the sum of the color number "1381" (R: 88, G: 104, B: 88) and the color number "1382" (R: 88, G: 104, B: 104) to the sum of the color number "1636" (R: 104, G: 104, B: 72), the color number "1637" (R: 104, G: 104, B: 88), and the color number "1638" (R: 104, G: 104, B: 104) was evaluated using a visual analyzer IRIS VA400 (available from Alpha mos).

The color numbers "1636", "1637", and "1638" correspond to colors having a light yellow tint, and the color numbers "1381" and "1382" correspond to colors having a deep yellow tint. A smaller value of this ratio means suppression of yellow tint coloring due to thermal degradation, and higher thermal stability.

[Table II-1]

| | Bio EVOH (%) | Content of titanium compound in terms of metal (ppm) | Content of alkaline earth metal compound (A) in terms of metal (ppm) | Content of alkaline earth metal compound in terms of metal/content of titanium compound in terms of metal | Coloring evaluation (1381 + 1382)/(1636 + 1637 + 1638) |
|---|---|---|---|---|---|
| Example II-1 | 100 | 0.04 | 1200 | 30000 | 0.8 |
| Example II-2 | 100 | 0.04 | 40 | 1000 | 0.6 |
| Example II-3 | 100 | 0.1 | 200 | 2000 | 1.0 |

(continued)

| | Bio EVOH (%) | Content of titanium compound in terms of metal (ppm) | Content of alkaline earth metal compound (A) in terms of metal (ppm) | Content of alkaline earth metal compound in terms of metal/content of titanium compound in terms of metal | Coloring evaluation (1381 + 1382)/(1636 + 1637 + 1638) |
|---|---|---|---|---|---|
| Comparative Example II-1 | 100 | 3 | 0 | 0 | 1.2 |

The results shown in Table II-1 indicate that the compositions of Examples II-1 to II-3 which contain a specific trace amount of a titanium compound and in which the titanium compound and the alkaline earth metal compound (A) are contained at a specific mass ratio have a lower proportion of deep yellow tint and excellent thermal stability as compared with the composition of Comparative Example II-1 which does not contain a specific trace amount of a titanium compound and in which the titanium compound and the alkaline earth metal compound (A) are not contained at a specific mass ratio.

In addition, a multilayer structure including a layer composed of the composition of each of Examples II-1 to II-3 is also excellent in thermal stability, and a molded body and a food packaging body containing such a multilayer structure are also excellent in thermal stability.

Third Aspect

Example III-1

Production of Composition Pellets Containing Titanium Compound and Metal Compound (B) Belonging to Specific Period d-Block

There were used the produced EVOH resin pellets, rutile type titanium(IV) oxide (available from FUJIFILM Wako Pure Chemical Corporation) having an average particle size of 5 $\mu$m or less as a titanium compound, and zinc caprylate "Z-08N" (available from NITTO KASEI KOGYO K.K.) as a metal compound (B) belonging to the specific period d-block.

Melt kneading was performed under kneading conditions described below with a tabletop kneader "Xplore-HTMC 15HT (15 mL volume)" (available from Rheolab Ltd.) so that in the EVOH resin pellets, the content of titanium oxide in terms of metal was 0.04 ppm relative to the mass of the composition, and the content of zinc caprylate in terms of metal was 800 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example III-2

A composition was produced in the same manner as in Example III-1, except that the content of zinc caprylate in terms of metal was changed to 0.1 ppm relative to the mass of the composition in Example III-1.

Example III-3

A composition was produced in the same manner as in Example III-1, except that the content of titanium oxide in terms of metal was changed to 0.1 ppm relative to the mass of the composition, and the content of zinc caprylate in terms of metal was changed to 200 ppm relative to the mass of the composition in Example III-1.

Comparative Example III-1

A composition was produced in the same manner as in Example III-1, except that the content of titanium oxide in terms of metal was changed to 3 ppm relative to the mass of the composition, and the content of zinc caprylate in terms of metal was changed to 0 ppm relative to the mass of the composition in Example III-1.

The produced compositions of Examples III-1 to III-3 and Comparative Example III-1 were subjected to the thermal stability evaluation described below. The results are presented in Table III-1 below.

Thermal Stability Evaluation

The produced composition was cut with a nipper, and the resultant pulverized product was used as a sample. The ratio ("1347" + "1348 + "1349")/("1381" + "1382") of the sum of the color number "1347" (R: 88, G: 72, B: 56), the color number "1348" (R: 88, G: 72, B: 72), and the color number "1349" (R: 88, G: 72, B: 88) to the sum of the color number "1381" (R: 88, G: 104, B: 88) and the color number "1382" (R: 88, G: 104, B: 104) was evaluated using a visual analyzer IRIS VA400 (available from Alpha mos).

The color numbers "1381" and "1382" correspond to colors having a light yellow tint, and the color numbers "1347", "1348", and "1349" correspond to colors having a deep yellow tint. A smaller value of this ratio means suppression of yellow tint coloring due to thermal degradation, and higher thermal stability.

[Table III-1]

| | Bio EVOH (%) | Content of titanium compound in terms of metal (ppm) | Content of metal compound (B) belonging to period 4 d-block of long-form periodic table in terms of metal (ppm) | Content of metal compound (B) belonging to period 4 d-block of long-form periodic table in terms of metal/content of titanium compound in terms of metal | Coloring evaluation (1347 + 1348 + 1349)/(1381 + 1382) |
|---|---|---|---|---|---|
| Example III-1 | 100 | 0.04 | 800 | 20000 | 2 |
| Example III-2 | 100 | 0.04 | 0.1 | 2.5 | 3 |
| Example III-3 | 100 | 0.1 | 200 | 2000 | 1 |
| Comparative Example III-1 | 100 | 3 | 0 | 0 | 7 |

The results shown in Table III-1 indicate that the compositions of Examples III-1 to III-3 which contain a specific trace amount of a titanium compound and in which the titanium compound and a metal compound belonging to the specific period d-block are contained at a specific mass ratio have a lower proportion of a deep yellow tint and excellent thermal stability as compared with the composition of Comparative Example III-1 which does not contain a specific trace amount of a titanium compound and in which the titanium compound and the metal compound belonging to the specific period d-block are not contained at a specific mass ratio.

In addition, a multilayer structure including a layer composed of the composition of each of Examples III-1 to III-3 is also excellent in thermal stability, and a molded body and a food packaging body containing such a multilayer structure are also excellent in thermal stability.

Fourth Aspect

Example IV-1

Production of Composition Pellets Containing Titanium Compound and Lubricant (C)

There were used the produced EVOH resin pellets, rutile type titanium(IV) oxide (available from FUJIFILM Wako Pure Chemical Corporation) having an average particle size of 5 $\mu$m or less as a titanium compound, and a lubricant "ALFLOW H50-FP" (available from NOF CORPORATION).

Melt kneading was performed under kneading conditions described below with a tabletop kneader "Xplore-HTMC 15HT (15 mL volume)" (available from Rheolab Ltd.) so that in the EVOH resin pellets, the content of titanium oxide in terms of metal was 0.04 ppm relative to the mass of the composition, and the content of the lubricant (C) was 8000 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example IV-2

A composition was produced in the same manner as in Example IV-1 except that the content of the lubricant (C) was changed to 40 ppm relative to the mass of the composition in Example IV-1.

Example IV-3

A composition was produced in the same manner as in Example IV-1 except that the content of titanium oxide in terms of metal was changed to 0.1 ppm relative to the mass of the composition and the content of the lubricant (C) was changed to 200 ppm relative to the mass of the composition in Example IV-1.

Comparative Example IV-1

A composition was produced in the same manner as in Example IV-1 except that the content of titanium oxide in terms of metal was changed to 3 ppm relative to the mass of the composition and the content of the lubricant (C) was changed to 0 ppm relative to the mass of the composition in Example IV-1.

The produced compositions of Examples IV-1 to IV-3 and Comparative Example IV-1 were subjected to the thermal stability evaluation described below. The results are shown in Table IV-1 below.

Thermal Stability Evaluation

The produced composition was cut with a nipper, and the resultant pulverized product was used as a sample. The ratio ("1363" + "1364"+ "1365")/("1636" + "1637" + "1638") of the sum of the color number "1363" (R: 88, G: 88, B: 56), the color number "1364" (R: 88, G: 88, B: 72), and the color number "1365" (R: 88, G: 88, B: 88) to the sum of the color number "1636" (R: 104, G: 104, B: 72), the color number "1637" (R: 104, G: 104, B: 88), and the color number "1638" (R: 104, G: 104, B: 104) was evaluated using a visual analyzer IRIS VA400 (available from Alpha mos).

The color numbers "1636", "1637", and "1638" correspond to colors having a light yellow tint, and the color numbers "1363", "1364", and "1365" correspond to colors having a deep yellow tint. A smaller value of this ratio means suppression of yellow tint coloring, and higher thermal stability.

[Table IV-1]

| | Bio EVOH (%) | Content of titanium compound in terms of metal (ppm) | Content of lubricant (C) (ppm) | Content of lubricant (C)/content of titanium compound in terms of metal | Coloring evaluation (1363 + 1364 + 1365)/(1636 + 1637 + 1638) |
|---|---|---|---|---|---|
| Example IV-1 | 100 | 0.04 | 8000 | 200000 | 0.2 |
| Example IV-2 | 100 | 0.04 | 40 | 1000 | 0.15 |
| Example IV-3 | 100 | 0.1 | 200 | 2000 | 0.2 |
| Comparative Example IV-1 | 100 | 3 | 0 | 0 | 0.78 |

The results shown in Table IV-1 indicate that the compositions of Examples IV-1 to IV-3 which contain a specific trace amount of a titanium compound and in which the titanium compound and the lubricant (C) are contained at a specific mass ratio have a lower proportion of deep yellow tint and excellent thermal stability as compared with the composition of Comparative Example IV-1 which does not contain a specific trace amount of a titanium compound and in which the titanium compound and the lubricant (C) are not contained at a specific mass ratio.

In addition, a multilayer structure including a layer composed of the composition of each of Examples IV-1 to IV-3 is also excellent in thermal stability, and a molded body and a food packaging body containing such a multilayer structure are also excellent in thermal stability.

Fifth Aspect

Example V-1

Production of Composition Pellets Containing Titanium Compound and Polyamide Resin (D)

There were used the produced EVOH resin pellets, rutile type titanium(IV) oxide (available from FUJIFILM Wako Pure Chemical Corporation) having an average particle size of 5 μm or less as a titanium compound, and "1028EN" (available from DSM) as a polyamide resin (D).

In the EVOH resin pellets, the polyamide resin was dry-blended so that the content was 20% relative to the entire composition, melt-kneaded with a tabletop kneader "Xplore-HTMC 15HT (15 mL volume)" (manufactured by Rheolab Ltd.) under kneading conditions described below so that the content of titanium oxide in terms of metal was 0.1 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example V-2

A composition was produced in the same manner as in Example V-1 except that the content of titanium oxide in terms of metal was changed to 0.5 ppm relative to the mass of the composition in Example V-1.

Comparative Example V-1

A composition was produced in the same manner as in Example V-1 except that titanium oxide was not used in Example V-1.

Comparative Example V-2

A composition was produced in the same manner as in Example V-1 except that the content of titanium oxide in terms of metal was changed to 3 ppm relative to the mass of the composition in Example V-1.

The extrusion processability of the produced compositions of Examples V-1 and V-2 and Comparative Examples V-1 and V-2 was evaluated, and the thermal stability evaluation described below was performed using the produced compositions. The results are shown in Table V-1 below.

Evaluation of Extrusion Processability

The extrusion processability was determined by whether a mixture is obtained by melt-kneading the composition with a desktop kneader "Xplore-HTMC 15HT (15 mL volume)" (available from Rheolab Ltd.), cooling and solidifying the extruded and discharged strands by air cooling. The case where a strand was obtained was evaluated as "○ (Good)", and the case where a strand was not obtained was evaluated as "× (Bad)".

Thermal Stability Evaluation

The produced composition was cut with a nipper, and the resultant pulverized product was used as a sample. The ratio ("1091" + "1092"+ "1093")/("1620" + "1621") of the sum of the color number "1091" (R: 72, G: 72, B: 56), the color number "1092" (R: 72, G: 72, B: 72), and the color number "1093" (R: 72, G: 72, B: 88) to the sum of the color number "1620" (R: 104, G: 88, B: 72), and the color number "1621" (R: 104, G: 88, B: 88) was evaluated using a visual analyzer IRIS VA400 (available from Alpha mos).

The color numbers "1620" and "1621" correspond to colors having a light yellow tint, and the color numbers "1091", "1092", and "1093" correspond to colors having a deep yellow tint. A smaller value of this ratio means suppression of yellow tint coloring due to thermal degradation, and higher thermal stability.

[Table V-1]

|  | Bio EVOH (%) | Polyamide resin (%) | Content of titanium compound in terms of metal (ppm) | Extrusion processability | Coloring evaluation (1091 + 1092 + 1093)/(1620 + 1621) |
|---|---|---|---|---|---|
| Example V-1 | 80 | 20 | 0.1 | ○ | 1 |
| Example V-2 | 80 | 20 | 0.5 | ○ | 2 |
| Comparative Example V-1 | 80 | 20 | 0 | ○ | 3 |
| Comparative Example V-2 | 80 | 20 | 3 | ○ | 3 |

The results shown in Table V-1 indicate that the compositions of Examples V-1 and V-2 containing the polyamide resin (D) and containing a specific trace amount of a titanium compound have a lower proportion of deep yellow tint and excellent thermal stability as compared with the compositions of Comparative Examples V-1 and V-2 not containing a specific trace amount of a titanium compound (for example, the proportion in Examples V-1 and V-2 is about 33% to 66% lower than that in Comparative Examples V-1 and V-2).

In addition, a multilayer structure including a layer composed of the composition of each of Examples V-1 and V-2 is also excellent in thermal stability, and a molded body and a food packaging body containing such a multilayer structure are also excellent in thermal stability.

Sixth Aspect

Example VI-1

Production of Composition Pellets Containing Titanium Compound and Polyolefin Resin (E)

There were used the produced EVOH resin pellets, rutile type titanium(IV) oxide (available from FUJIFILM Wako Pure Chemical Corporation) having an average particle size of 5 $\mu$m or less as a titanium compound, and "NOVATEC PP (EA9)" (available from DSM) as a polyolefin resin (E).

In the EVOH resin pellets, the polyolefin resin was dry-blended so that the content was 95% relative to the entire composition, melt-kneaded with a tabletop kneader "Xplore-HTMC 15HT (15 mL volume)" (available from Rheolab Ltd.) under kneading conditions described below so that the content of titanium oxide in terms of metal was 0.1 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example VI-2

A composition was produced in the same manner as in Example VI-1 except that the content of titanium oxide in terms of metal was changed to 0.5 ppm relative to the mass of the composition in Example VI-1.

Comparative Example VI-1

A composition was produced in the same manner as in Example VI-1 except that titanium oxide was not used in Example VI-1.

Comparative Example VI-2

A composition was produced in the same manner as in Example VI-1 except that the content of titanium oxide in terms of metal was changed to 3 ppm relative to the mass of the composition in Example VI-1.

Comparative Example VI-3

A composition containing titanium oxide in an amount of 0.1 ppm in terms of metal relative to the mass of the polyolefin resin composition was produced without using EVOH resin.
The produced compositions of Examples VI-1 and VI-2 and Comparative Examples VI-1 to VI-3 were subjected to coloring evaluation. The results are shown in Table VI-1 below.

Coloring Evaluation

The produced composition was cut with a nipper, and the resultant pulverized product was used as a sample. The ratio ("1108" + "1109"/"1331") of the sum of the color number "1108" (R: 72, G: 88, B: 72) and the color number "1109" (R: 72, G: 88, B: 88) to the color number "1331" (R: 88, G: 56, B: 56) was evaluated using a visual analyzer IRIS VA400 (available from Alpha mos).
The color number "1331" corresponds to a color having a light yellow tint, and the color numbers "1108" and "1109" correspond to colors having a deep yellow tint. A smaller value of this ratio means suppression of yellow tint coloring due to thermal degradation, and higher thermal stability.

[Table VI-1]

| | Bio EVOH (%) | Polyolefin resin (E) (%) | Content of titanium compound in terms of metal (ppm) | Coloring evaluation (1108 + 1109)/(1331) |
|---|---|---|---|---|
| Example VI-1 | 5 | 95 | 0.1 | 1 |
| Example VI-2 | 5 | 95 | 0.5 | 1 |
| Comparative Example VI-1 | 5 | 95 | 0 | 2 |
| Comparative Example VI-2 | 5 | 95 | 3 | 2 |
| Comparative Example VI-3 | 0 | 100 | 0.1 | 3 |

The results shown in Table VI-1 indicate that the compositions of Examples VI-1 and VI-2 containing the polyolefin resin (E) and containing a specific trace amount of a titanium compound have a lower proportion of deep yellow tint and excellent thermal stability as compared with the compositions of Comparative Examples VI-1 and 2 not containing a specific trace amount of a titanium compound and the composition of Comparative Example VI-3 not containing EVOH resin (for example, the proportion in Examples VI-1 and VI-2 is about 50% lower than that in Comparative Examples VI-1 and VI-2).
In addition, a multilayer structure including a layer composed of the composition of each of Examples VI-1 and VI-2 is also excellent in thermal stability, and a molded body and a food packaging body containing such a multilayer structure are also excellent in thermal stability.

Seventh Aspect

Example VII-1

Production of Composition Pellets Containing Titanium Compound and Olefin elastomer (F)

There were used the produced EVOH resin pellets, rutile type titanium(IV) oxide (available from FUJIFILM Wako Pure Chemical Corporation) having an average particle size of 5 μm or less as a titanium compound, and "TAFMER: A4085S (random copolymer)" (available from Mitsui Chemicals, Inc.) as an olefin elastomer (F).

In the EVOH resin pellets, the olefin elastomer was dry-blended so that the content was 20% relative to the entire composition, melt-kneaded with a tabletop kneader "Xplore-HTMC 15HT (15 mL volume)" (available from Rheolab Ltd.) under kneading conditions described below so that the content of titanium oxide in terms of metal was 0.1 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example VII-2

A composition was produced in the same manner as in Example VII-1 except that the content of titanium oxide in terms of metal was changed to 0.5 ppm relative to the mass of the composition in Example VII-1.

Comparative Example VII-1

A composition was produced in the same manner as in Example VII-1 except that titanium oxide was not used in Example VII-1.

Comparative Example VII-2

A composition was produced in the same manner as in Example VII-1 except that the content of titanium oxide in terms of metal was changed to 3 ppm relative to the mass of the composition in Example VII-1.

The produced compositions of Examples VII-1 and VII-2 and Comparative Examples VII-1 and VII-2 were subjected to coloring evaluation. The results are shown in Table VII-1 below.

Coloring Evaluation

The produced composition was cut with a nipper, and the resultant pulverized product was used as a sample. The ratio ("1363" + "1364"+ "1365"+ "1366")/("1381" + "1382") of the sum of the color number "1363" (R: 88, G: 88, B: 56), the color number "1364" (R: 88, G: 88, B: 72), the color number "1365" (R: 88, G: 88, B: 88), and the color number "1366" (R: 88, G: 88, B: 104) to the sum of the color number "1381" (R: 88, G: 104, B: 88) and the color number "1382" (R: 88, G: 104, B: 104) was evaluated using a visual analyzer IRIS VA400 (available from Alpha mos).

The color numbers "1381" and "1382" correspond to colors having a light yellow tint, and the color numbers "1363", "1364", "1365", and "1366" correspond to colors having a deep yellow tint. A smaller value of this ratio means suppression of yellow tint coloring due to thermal degradation, and higher thermal stability.

[Table VII-1]

|  | Bio EVOH (%) | Olefin elastomer (F) (%) | Content of titanium compound in terms of metal (ppm) | Coloring evaluation (1363 + 1364 + 1365 + 1366)/(1381 + 1382) |
|---|---|---|---|---|
| Example VII-1 | 80 | 20 | 0.1 | 3.0 |
| Example VII-2 | 80 | 20 | 0.5 | 4.0 |
| Comparative Example VII-1 | 80 | 20 | 0 | 5.0 |

(continued)

|  | Bio EVOH (%) | Olefin elastomer (F) (%) | Content of titanium compound in terms of metal (ppm) | Coloring evaluation (1363 + 1364 + 1365 + 1366)/(1381 + 1382) |
|---|---|---|---|---|
| Comparative Example VII-2 | 80 | 20 | 3 | 5.5 |

The results shown in Table VII-1 indicate that the compositions of Examples VII-1 and VII-2 containing the olefin elastomer (F) and containing a specific trace amount of a titanium compound have a lower proportion of deep yellow tint and excellent thermal stability as compared with the compositions of Comparative Examples VII-1 and VII-2 not containing a specific trace amount of a titanium compound (for example, the proportion in Examples VII-1 is about 40% lower than that in Comparative Example VII-1, and is about 45% lower than that in Comparative Example VII-2).

In addition, a multilayer structure including a layer composed of the composition of each of Examples VII-1 and VII-2 is also excellent in thermal stability, and a molded body and a food packaging body containing such a multilayer structure are also excellent in thermal stability.

Although specific embodiments of the present disclosure have been described in the above Examples, the above Examples are merely illustrative and are not to be construed as limiting. Various modifications apparent to those skilled in the art are intended to be within the scope of the present disclosure.

Industrial Applicability

The present composition is excellent in thermal stability. Thus, the present composition is useful as various packaging materials for various foods, seasonings such as mayonnaise and dressing, fermented foods such as miso, oil and/or fat foods such as salad oil, beverages, cosmetics, and pharmaceuticals.

**Claims**

1. A composition comprising an ethylene-vinyl alcohol copolymer and a titanium compound, wherein

   at least a portion of the ethylene-vinyl alcohol copolymer is derived from biomass, and
   a content of the titanium compound in terms of metal is 0.0001 ppm or more and less than 1 ppm relative to a mass of the composition.

2. The composition according to claim 1, wherein the content of the titanium compound in terms of metal is 0.0001 ppm or more and 0.8 ppm or less relative to the mass of the composition.

3. The composition according to claim 1 or 2, further comprising an alkaline earth metal compound (A) in the composition, wherein a mass ratio of a content of the alkaline earth metal compound (A) in terms of metal to the content of the titanium compound in terms of metal is from 500 to 55000.

4. The composition according to any one of claims 1 to 3, further comprising a metal compound (B) belonging to period 4 d-block of the long-form periodic table other than the titanium compound in the composition, wherein a mass ratio of a content of the metal compound (B) belonging to period 4 d-block of the long-form periodic table in terms of metal to the content of the titanium compound in terms of metal is from 2 to 45000.

5. The composition according to any one of claims 1 to 4, further comprising a lubricant (C) other than the alkaline earth metal compound (A) in the composition, wherein a mass ratio of a content of the lubricant (C) to the content of the titanium compound in terms of metal is from 500 to 280000.

6. The composition according to any one of claims 1 to 5, further comprising a polyamide resin (D) in the composition.

7. The composition according to any one of claims 1 to 6, further comprising a polyolefin resin (E) in the composition.

8. The composition according to any one of claims 1 to 7, further comprising an olefin elastomer (F) in the composition.

9. The composition according to any one of claims 1 to 8, wherein the ethylene-vinyl alcohol copolymer has a biobased content of from 0.01 to 99%.

10. The composition according to any one of claims 1 to 8, wherein the ethylene-vinyl alcohol copolymer has a biobased content of from 1 to 99%.

11. A molding material comprising the composition according to any one of claims 1 to 10.

12. A multilayer structure comprising a layer containing the composition according to any one of claims 1 to 10.

13. The multilayer structure according to claim 12, further comprising an adhesive resin layer.

14. A molded body comprising the multilayer structure according to claim 12 or 13.

15. A food packaging body comprising the multilayer structure according to claim 12 or 13.

16. A method for producing the composition according to any one of claims 1 to 10, the method comprising mixing the ethylene-vinyl alcohol copolymer and the titanium compound.

17. A method for producing the multilayer structure according to claim 12 or 13, the method comprising melt-molding a layer containing the composition.

## INTERNATIONAL SEARCH REPORT

| International application No. |
| --- |
| **PCT/JP2024/034321** |

| A. | CLASSIFICATION OF SUBJECT MATTER |
| --- | --- |

*C08L 29/04*(2006.01)i; *B32B 27/28*(2006.01)i; *C08K 3/11*(2018.01)i; *C08K 3/105*(2018.01)i; *C08L 23/00*(2006.01)i;
*C08L 77/00*(2006.01)i
FI:    C08L29/04 A; C08L29/04 D; C08K3/11; C08K3/105; B32B27/28 102; C08L77/00; C08L23/00; C08L29/04 C

According to International Patent Classification (IPC) or to both national classification and IPC

| B. | FIELDS SEARCHED |
| --- | --- |

Minimum documentation searched (classification system followed by classification symbols)

C08L29/04; B32B27/28; C08K3/11; C08K3/105; C08L23/00; C08L77/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-163378 A (MITSUBISHI CHEMICAL CORPORATION) 26 September 2019 (2019-09-26)<br>claim 1, paragraphs [0007], [0070], [0083]-[0084], [0088], [0093]-[0095], examples 2, 3, table 1 | 1-17 |
| Y | | 1-17 |
| Y | JP 2000-263712 A (KURARAY CO., LTD.) 26 September 2000 (2000-09-26)<br>claims 1, 4, 5, paragraphs [0009], [0064], examples 1-8, table 1 | 1-17 |
| Y | JP 2001-151972 A (KURARAY CO., LTD.) 05 June 2001 (2001-06-05)<br>claims 1, 2, 7, paragraphs [0007], [0068], examples 1-6, tables 1, 2 | 1-17 |
| Y | JP 11-140244 A (KURARAY CO., LTD.) 25 May 1999 (1999-05-25)<br>claims 1, 8, paragraphs [0002], [0015], [0059], tables 1-10 | 1-17 |

✓ Further documents are listed in the continuation of Box C.    ✓ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **30 October 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/034321** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 3-106953 A (KURARAY CO., LTD.) 07 May 1991 (1991-05-07)<br>claims 1, 5, p. 1, right column, line 18 to p. 2, upper left column, line 4, p. 2, lower right column, lines 11-16, examples 1-7 | 1-17 |
| A | JP 2002-284885 A (KURARAY CO., LTD.) 03 October 2002 (2002-10-03) | 1-17 |

Form PCT/ISA/210 (second sheet) (July 2022)

**INTERNATIONAL SEARCH REPORT**
Information on patent family members

International application No.

**PCT/JP2024/034321**

| Patent document cited in search report | | | Publication date (day/month/year) | Patent family member(s) | Publication date (day/month/year) |
|---|---|---|---|---|---|
| JP | 2019-163378 | A | 26 September 2019 | (Family: none) | |
| JP | 2000-263712 | A | 26 September 2000 | (Family: none) | |
| JP | 2001-151972 | A | 05 June 2001 | (Family: none) | |
| JP | 11-140244 | A | 25 May 1999 | (Family: none) | |
| JP | 3-106953 | A | 07 May 1991 | (Family: none) | |
| JP | 2002-284885 | A | 03 October 2002 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022013857 A

- JP 2022027726 A